# EUROPEAN PATENT SPECIFICATION

(11) **EP 4 374 580 B1**
(45) Date of publication and mention of the grant of the patent: **02.04.2025**
(21) Application number: 22751867.7
(22) Date of filing: 14.07.2022
(51) Int. Cl.: H04R 1/10, H04M 1/60, H04R 3/00, H04R 3/04, H04R 25/00

(54) **MOVEMENT-CONTROLLED EARPHONE DEVICE FOR THE TRANSCEIVING OF ACOUSTIC SIGNALS**
BEWEGUNGSGESTEUERTE OHRHÖRERVORRICHTUNG ZUM SENDEN/EMPFANGEN VON AKUSTISCHEN SIGNALEN
DISPOSITIF D'ÉCOUTEUR COMMANDÉ EN MOUVEMENT POUR L'ÉMISSION-RÉCEPTION DE SIGNAUX ACOUSTIQUES

(30) Priority: 23.07.2021 IT 202100019751
(43) Date of publication of application: 29.05.2024
(73) Proprietor: Monte Paschi Fiduciaria S.p.A., 53100 Siena (SI) (IT)
(72) Inventor: MINATI, Ludovico, 38055 Grigno (TN) (IT); MANENTE, Matteo, 30037 Scorzè (VE) (IT)
(74) Representative: Mozzanica, Luca
(86) International application number: PCT/IT2022/050206
(87) International publication number: WO 2023/002515

(56) References cited:
- EP-A1- 2 002 687
- EP-B1- 2 002 687
- WO-A1-2011/035061
- WO-A1-2018/012576
- JP-A- 2001 309 498
- US-A1- 2015 003 651
- US-A1- 2018 174 597
- US-A1- 2018 227 658
- US-A1- 2021 076 138
- US-B2- 8 949 744

## Description

### Scope of the invention

The present invention is applied in the field of devices suitable for: acquiring acoustic signals diffusing outside the device, transducing said acoustic signals into electrical signals, subjecting the latter to an appropriate processing and re-transducing said electrical signals, as processed, into acoustic signals for their emission outside the device. For convenience of exposition, in the following description the expression "device for transceiving acoustic signals" will refer to a device of this type.

Among devices for transceiving acoustic signals, those referred to in the present invention are so-called "ear devices", i.e., devices that can be applied to a person's ear in such a way that the acoustic signals emitted by the device are directed, at least partially, to the external ear canal of said ear. Such devices include, by way of example, behind-the-ear hearing aids, commonly referred to as "hearing aids".

### Review of known art

Current earphones for the transceiving of acoustic signals process the electrical signals resulting from a transduction of sound waves, applying predetermined rules with which a device is configured according to the use for which it is intended (for example, to overcome a hearing impairment or to allow optimal listening to music, possibly of one or more specific genres).

A user of a device of the aforementioned type can generally give commands to said device (for example to raise or lower the sound volume of the acoustic signals emitted by said device) directly, preferably by means of one or more buttons provisioned on the device, and/or indirectly, preferably by means of a specific "app" for example installed on a smartphone to which the device is connectable.

In the first case, a user of the device can only issue a command to the device in a tactile manner. In the second case, a person cannot give commands directly to the device. He/she must necessarily interact with a "bridge device", such as the aforementioned smartphone, on which the interface of the device is installed.

US 2018/227658 A1 shows a wireless headset with a microphone on an earcup housing to pick up ambient sound. The headset comprises plural air microphones and bone conduction microphones and performs mixing of ambient sound and sound received from a radio interface. It further shows a multi-feed hands-free audio / video call context and an emphasis of voice band using filter, amplifier, and attenuator elements. An IMU sensor detects head movement patterns for headset control commands as well as optical or capacitive sensors to aid gesture recognition. EP 2 002 687 A1 shows an earcup having an external microphone with mixing phase-inverted ambient noise, music source, and wireless telephony audio to a speaker output with individual gain adjustments, and head movement detection to control noise reduction function using the external microphone signal of the earcup. US 2015/003651 A1 shows a hearing device connected to a terminal device. Two microphone signals exploit level and delay information in the microphone signals to determine head movement as control commands for the sound volume control of the headset, the filter control for music mode or voice, or setting a phone conversation setting. US 2021/076138 A1, US 8 949 744 B2, and WO 2011/035061 A1 also show headset devices with acceleration sensor for head movement detection for identifying playback commands and voice enhancement techniques using voice band filters and gain control.

### Purposes of the invention

The object of the present invention is to overcome the aforementioned drawbacks by indicating an earphone device for transceiving acoustic signals (i.e., as specified above, suitable to: acquiring acoustic signals diffusing externally to the device, transducing said acoustic signals into electrical signals, subjecting the latter to a suitable processing and retranslating said electrical signals, as processed, into acoustic signals for an emission of the same outside the device) to which a user of said device can give one or more commands directly (i.e., without resorting to the use of intermediate devices) and without pressing any key (i.e., not tactilely).

### Summary and advantages of the invention

The object of the present invention is a device comprising the set of features as defined in claim 1. Preferred embodiments are defined in the dependent claims.

### Brief description of the figures

Further purposes and advantages of the present invention will be clear from the following detailed description of examples of embodiments thereof and the accompanying drawings, given by way of explanation only and not limitation, wherein:
- **Figure 1** schematically shows a device in a first configuration;
- **Figure 2** shows schematically a first variant of the device in Figure 1;
- **Figure 3** schematically shows a second variant of the device in Figure 1;
- **Figure 4** schematically shows a third variant of the Figure 1 device;
- **Figure 5** schematically shows a fourth variant of the Figure 1 device;
- **Figure 6** schematically shows a fifth variant of the Figure 1 device;
- **Figure 7** schematically shows a sixth variant of the Figure 1 device;
- **Figure 8** schematically shows a seventh variant of the Figure 1 device;
- **Figure 9** schematically shows an eighth variant of the device in Figure 1;
- **Figure 10** schematically shows a ninth variant of the Figure 1 device according to the invention;
- **Figure 11** schematically shows a tenth variant of the Figure 1 device.

### Detailed description of some preferred forms of implementation of the invention

In the continuation of this description a figure may also be illustrated with reference to elements not expressly indicated in that figure but in other figures. The scale and proportions of the various elements depicted do not necessarily correspond to the real ones.

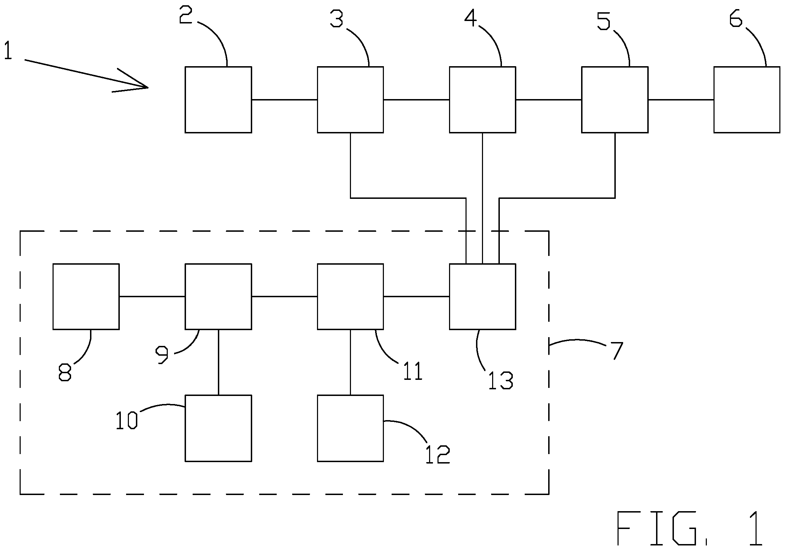

**Figure 1** shows a device 1 applicable to a person at an ear of the person. The device 1 comprises a first acoustic receiver 2 preferably corresponding to a microphone and suitable for picking up environmental sounds and noises. More precisely, the receiver 2 is suitable for acquiring acoustic signals from an environment external to the device 1, and for transducing said acoustic signals into electrical signals. The receiver 2 is placed in the device 1 in such a way that, when the device 1 is applied to a person at one ear of said person, the receiver 2 is suitable for receiving acoustic signals spreading outside the ear canal of said ear. In other words, the receiver 2 is placed in the device 1 in such a way that, when the device 1 is applied to a person at one ear thereof, the external environment from which the receiver 2 is suitable for receiving acoustic signals is also external to the external ear canal of said ear.

The device 1 also includes a first variable gain amplifier 3 connected to the receiver 2 and suitable for amplifying the electrical signals into which the receiver 2 transduces the acoustic signals coming from the external environment. The amplifier 3 is connected to a first frequency filter 4 suitable for filtering the said electrical signals as amplified by the amplifier 3. The filter 4 confers the electrical signals as filtered by the same to a second variable gain amplifier 5 for further amplification of said electrical signals. The amplifier 5 is connected to at least one audio player 6 preferably corresponding to a loudspeaker and suitable for transducing into acoustic signals the electrical signals conferred to it by the amplifier 5 (i.e., the electrical signals as amplified by the amplifier 5). The audio player 6 is also suitable for emitting said acoustic signals (into which it transduces the electrical signals as amplified by the amplifier 5) in an environment external to the device 1. More precisely, the audio player 6 is placed in the device 1 in such a way that, when the device 1 is applied to a person at one of his ears, the audio player 6 is suitable for emitting said acoustic signals inside the external ear canal of said ear. In other words, player 6 is placed in device 1 in such a way that, when device 1 is applied to a person at one ear of said person, the environment in which player 6 is likely to emit acoustic signals is external to device 1 but within the external auditory conduit of said ear.

The device 1 also includes a control unit 7 connected to the amplifiers 3 and 5, to adjust the respective gains of the same, and to the filter 4 to adjust both the frequencies attenuated by the same, and the degree of attenuation of each of the frequencies attenuated by the filter 4.

In the light of the above, the device 1 qualifies as an acoustic signal transceiver since it is suitable for acquiring acoustic signals diffusing outside the device 1, transducing said acoustic signals into electrical signals, subjecting said electrical signals to an appropriate processing and retranslating said electrical signals, as processed, into acoustic signals for an emission of the same outside the device 1. The latter further qualifies as an "earpiece" since, as specified above, it is applicable to a person's ear in such a way that the acoustic signals emitted by the device 1 are directed, at least partially, to the external ear canal of said ear. Again, in light of the above, unit 7, by adjusting the gain of amplifier 3, can raise or lower the "audio" of receiver 2. Amplifier 3, therefore, acts as a volume control for the acoustic signals acquired by receiver 2. Finally, unit 7, acting on filter 4, can highlight certain frequency ranges of the electrical signals fed to filter 4 by amplifier 3.

The device 1 differs from known devices of the same type in that the unit 7 comprises a motion detection unit 8 preferably corresponding to an "Inertial Motion Unit" and preferably comprising a three-axis accelerometer and a three-axis gyroscope. Inertial Motion Units are substantially known. Therefore, we will not go into further details. The unit 8 is suitable for detecting a displacement of the device 1 preferably with respect to the ground, i.e. a movement undergone by the device 1 when worn by a person for example as a result of a movement of the head of said person. The unit 8 is further suitable for continuously emitting time-dependent electrical signals encoding information regarding any movements of (i.e., suffered by) the device 1.

The unit 8 imparts the electrical signals emitted therefrom to a first feature extraction unit 9 connected to the unit 8. The unit 9 preferably corresponds to a "feature extractor". The latter is substantially known. Therefore, we do not dwell on providing further details thereof. The unit 9 is suitable for performing analyses in the time domain and in the frequency domain, on the electrical signals received by the unit 8 during a time interval, and for generating a vector associated with said time interval and whose elements encode information concerning certain aspects of one or more possible movements of the device 1 during the time interval to which the vector is associated. The electrical signals emitted continuously and as a function of time by the unit 8 therefore determine, with the passage of time, the generation, by the unit 9, of a succession of said vectors.

The unit 9 is connected to a first memory 10 suitable for containing rules on the basis of which the unit 9 is suitable for performing the aforementioned analyses in the time domain and in the frequency domain. The unit 9 is further connected to a first motion recognition unit 11. The latter preferably corresponds to a numerical classifier, more preferably to a neural network and even more preferably to a neural network of the "multilayer perceptron" type. Alternatively, the unit 11 may correspond to an expert system. The unit 11 is suitable for performing analyses on the elements of the vectors emitted by the unit 9 so as to determine whether or not one or more certain movements of the device 1 have taken place. The unit 11 is further suitable for issuing certain commands depending on whether said one or more certain movements of the device 1 have or have not taken place.

Like the unit 9, the unit 11 is connected to a second memory 12 suitable for containing parameters on the basis of which the unit 11 is suitable for performing said analyses on the elements of the vectors emitted by the unit 9. If the unit 11 corresponds to a numerical classifier, said parameters preferably correspond to synaptic weights and/or transfer functions of a plurality of computational units included in the numerical classifier. If the unit 11 corresponds to an expert system, said parameters preferably correspond to rules applied by the expert system.

The unit 11 is also connected to an execution unit 13 suitable for implementing the commands issued by the unit 11. More precisely, it is the unit 13, within the unit 7, that is connected to the amplifiers 3 and 5, to adjust the respective gains of the same, and to the filter 4 to adjust both the frequencies attenuated by the same, and the degree of attenuation of each of the frequencies attenuated by the filter 4.

In view of the foregoing, said device 1 being an earpiece device, a user of said device 1, after wearing said device 1, may advantageously impart one or more commands to said device 1 by making appropriate movements with his or her head. More generally, movements undergone by the device 1 as a result of movements of the head of said user act as command sources to modify the amplification of acoustic signals coming from an environment external to the device 1.

Acting on the rules contained in the memory 10 and on the parameters contained in the memory 12, it is possible to configure the units 9 and 11 in such a way that a determined movement undergone by the device 1 as a result of a motor act voluntarily made by a person with his head while wearing the device 1 determines, through the unit 13 and as an example a raising or lowering of the audio of the receiver 2 (by adjusting the gain of the amplifier 3) or an emphasizing of the human voice within a sound context (by adjusting the filter 4 so as to attenuate frequencies unrelated to the human voice) or a raising or lowering of the sound volume of the acoustic signals emitted by the reproducer 6 (by adjusting the gain of the amplifier 5).

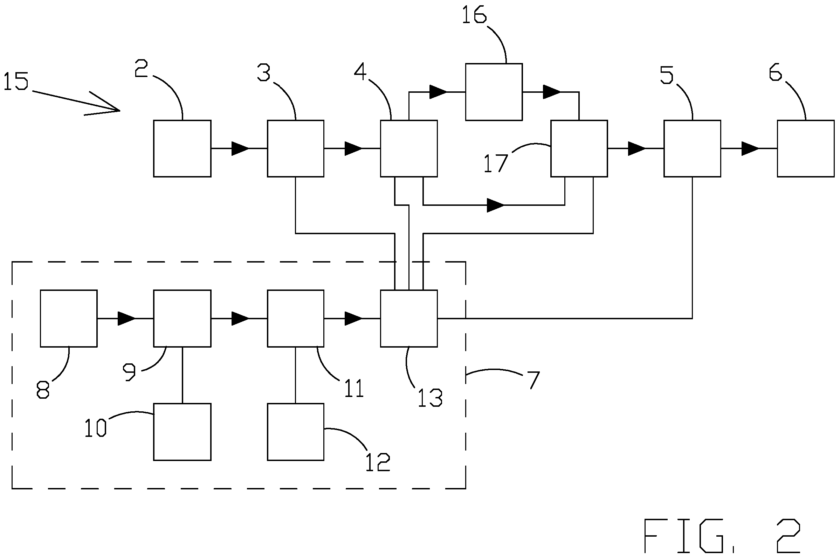

**Figure 2** shows a device 15 which differs from the device 1 in that it includes a "delay line" between the filter 4 and the amplifier 5. More precisely, the device 15, in addition to what is included in the device 1, includes a third memory 16 connected to the filter 4 and suitable for containing the electrical signals as filtered by the filter 4 (i.e., emitted by the latter) continuously and in the same time order in which said electrical signals are emitted by the filter 4. The memory 16 is also suitable to keep stored for a first period of time the said electrical signals emitted by the filter 4, and is managed according to the FIFO method. In view of this, at an emission of an electrical signal by the filter 4 at a first instant of time, the memory 16,
containing the electrical signals emitted by the filter 4 during an interval of time having a duration coincident with that of said first instant of time and terminating in a second instant of time immediately preceding said first instant of time,
- stores the electrical signal emitted by filter 4 in the above mentioned first instant of time
   and
- emits the electrical signal stored (previously) in memory 16 at the instant of time when the above time interval began.

By way of example, if the aforementioned first time frame has a duration of three seconds, upon an emission of an electrical signal from the filter 4 to the second 5, the memory 16,
containing the electrical signals emitted by filter 4 at seconds 2, 3 and 4, i.e. during a time interval having a duration of three seconds and ending in second 4 (immediately preceding second 5),
- stores the electrical signal emitted by filter 4 to second 5
   and
- emits the electrical signal stored (previously) in memory 16 at second 2 (i.e. at the instant of time when the above time interval began).

The device 15 further comprises a summing unit 17 connected both to the filter 4, for receiving the electrical signals emitted by the same, and to the memory 16, for receiving the electrical signals emitted by the latter. The summing unit 17 substantially acts as a mixing unit and is suitable for carrying out, at each instant of time, a sum between the electrical signal emitted by the filter 4 and the electrical signal emitted by the memory 16 at said instant of time. Said sum carried out by the summing unit 17 is weighted by means of a first coefficient associated with the electrical signals received (directly) by the filter 4, and a second coefficient associated with the electrical signals received by the memory 16. The amplifier 5 is connected to the summer 17 to receive and amplify the weighted sums performed by the latter. The amplifier 5, in contrast to the device 1, is connected to the filter 4 not directly, but exclusively through at least the summer 17.

Each of said first and second coefficients has a value of zero whenever the other of said coefficients has a value other than zero. In view of this and the foregoing, according to this variant of the device 1, the amplifier 5 is suitable for receiving (directly) the electrical signals emitted by the filter 4 and weighted by means of the first coefficient, and, but not simultaneously, the electrical signals emitted by the memory 16 and weighted by means of the second coefficient. Incidentally, the electrical signals emitted by the memory 16 are electrical signals previously emitted by the filter 4.

The unit 13 is also connected to the summing unit 17 and is suitable for adjusting the values assumed by the aforementioned first and second coefficients.

Acting on the rules contained in the memory 10 and on the parameters contained in the memory 12, it is advantageously possible to configure the units 9 and 11 in such a way that a determined movement undergone by the device 15 as a result of a motor act voluntarily performed by a person with his head while wearing the device 15 determines, by means of the unit 13 and by way of example, an interruption of the retransduction into acoustic signals of electrical signals in which acoustic signals are transduced (currently) coming from the external environment, and simultaneously a retransduction into acoustic signals of electrical signals contained in the memory 16 (and therefore in which acoustic signals previously coming from the external environment have been transduced), by adjusting the value assumed by the first and second coefficients. In other words, it is advantageously possible to command the device 15 to reproduce acoustic signals previously coming from the external environment (i.e., to make the user of the device 15 "listen again" to said acoustic signals).

By appropriately configuring the units 9 and 11 (respectively acting on the memories 10 and 12), it is also possible to ensure that the aforementioned command to play back acoustic signals previously coming from the external environment, is implemented by the unit 13 whenever the unit 11 notices that the device 15 has undergone a certain movement as a result of a certain involuntary movement of the head of the user of the device 15, typically signifying the failure to understand one or more words during a conversation or while listening to an audio.

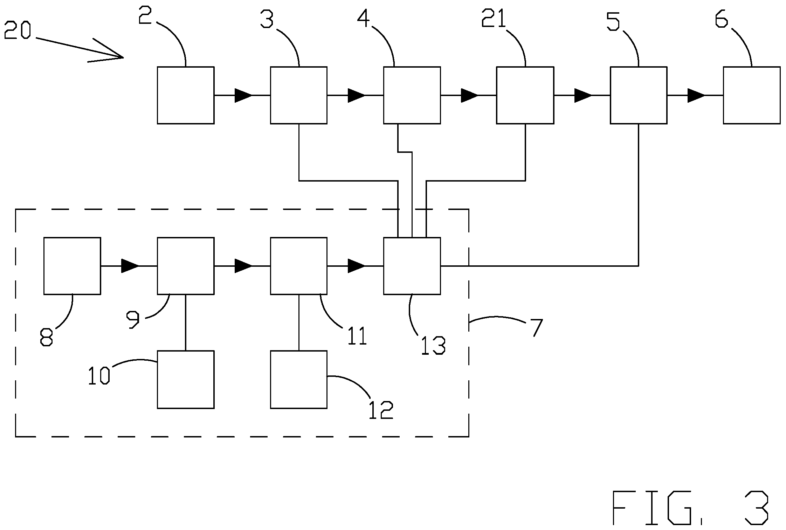

**Figure 3** shows a device 20 that differs from the device 1 in that it includes, in addition to what is included in the device 1, a second frequency filter 21 between the filter 4 and the amplifier 5. The filter 21 is a frequency filter with a non-linear and/or time dependent response. The filter 21 is connected to the filter 4 and is suitable for further filtering the electrical signals as filtered by the filter 4. The amplifier 5 is connected to the filter 21 for receiving electrical signals as filtered by the latter. The amplifier 5, in contrast to the device 1, is connected to the filter 4 not directly, but exclusively via at least the filter 21, so that the amplifier 5 is suitable for amplifying the electrical signals as filtered by the filter 4 exclusively as further filtered by at least the filter 21. Thus, the amplifier 5 amplifies the electrical signals as filtered by the filter 21 instead of the electrical signals as filtered (only) by the filter 4.

The filter 21 may also be installed in the device 15. In this case, the memory 16, like the summer 17, is connected to the filter 21 for receiving electrical signals as filtered by the latter. According to this variant, the memory 16 is connected to the filter 4 not directly, but exclusively by means of at least the filter 21, so that the memory 16 is suitable for storing, keeping stored for the said first time period and outputting the electrical signals as filtered by the filter 4 exclusively as further filtered by at least the filter 21. Thus, the memory 16 contains the electrical signals as filtered by the filter 21 instead of the electrical signals as filtered (only) by the filter 4. Similarly, according to this variant, the summer 17 is connected to the filter 21 for receiving electrical signals as filtered by the latter. According to this variant, the summer 17 is connected to the filter 4 not directly, but exclusively through at least the filter 21, so that the summer 17 is suitable for performing said weighted summing with the electrical signals emitted by the filter 4 exclusively as further filtered by at least the filter 21. Therefore, the summer 17 uses as addend the electrical signals as filtered by the filter 21 instead of the electrical signals as filtered (only) by the filter 4.

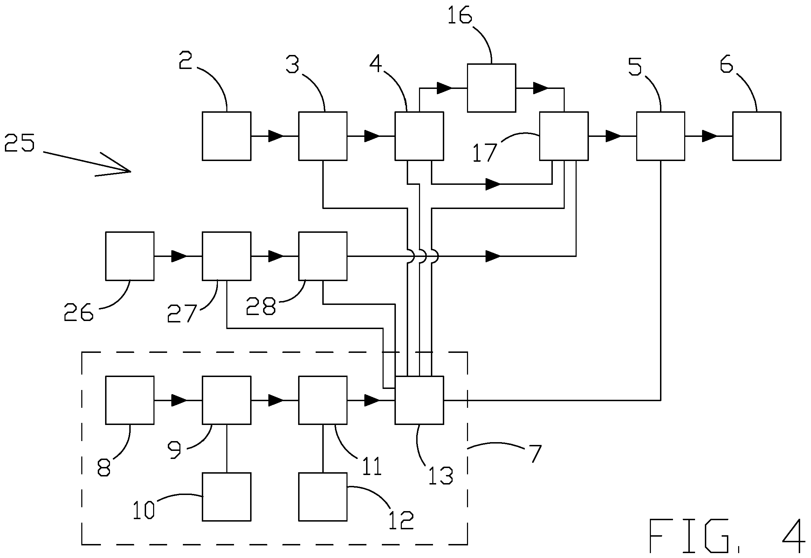

**Figure 4** shows a device 25 which differs from the device 15 in that it comprises, in addition to what is included in the device 15, a first electromagnetic receiver 26 preferably comprising an antenna and suitable for both receiving radio frequency electromagnetic waves encoding acoustic signals and transducing the received electromagnetic waves into electrical signals. The receiver 26 corresponds, by way of example, to a receiver connectable, preferably via the Bluetooth standard, to a cell phone or a smartphone for receiving audio of a telephone conversation taking place via said phone or said smartphone, and/or for receiving music played by said phone or said smartphone.

The device 25 also includes a third variable gain amplifier 27 connected to the receiver 26 and suitable for amplifying the electrical signals into which the receiver 26 transduces the received electromagnetic waves. The amplifier 27 is connected to a third frequency filter 28 suitable for filtering said electrical signals as amplified by the amplifier 27. The latter is suitable for adding, at each instant of time and weighted by means of a third coefficient, the electrical signal received by the filter 28 at said instant of time, to the weighted sum, respectively by means of the previously mentioned first and second coefficients, between the electrical signal received by the filter 4 at said instant of time and the electrical signal received by the memory 16 at said instant of time. The amplifier 5 is therefore suitable for receiving and amplifying the weighted sum, by means of the aforementioned first, second and third coefficients, between the electrical signals received by the summer 17 from the filter 4, the electrical signals received by the summer 17 from the memory 16 and the electrical signals received by the summer 17 from the filter 28.

Unit 13 is connected to amplifier 27 and is suitable for adjusting the gain of the latter. The unit 13 is also connected to the filter 28 and is suitable for adjusting both the frequencies attenuated by it and the degree of attenuation of each of the frequencies attenuated by the filter 28. Unit 13 also adjusts the value of the third coefficient.

Similarly to amplifier 3 and filter 4, unit 13, by adjusting the gain of amplifier 27, can cause the audio of receiver 26 to be raised or lowered. Thus, the amplifier 27 acts as a regulator of the sound volume of the acoustic signals in which the electromagnetic waves acquired by the receiver 26 are encoded. In addition, the unit 13, by acting on the filter 28, can highlight certain frequency ranges of the electrical signals imparted to the filter 28 by the amplifier 27. The filter 28 thus acts as an equalizer.

The device 25, in addition to transceiving acoustic signals coming from the external environment, can transmit, by means of the player 6, by way of example, the audio of a telephone conversation made by a smartphone to which the device 25 can be connected through the receiver 26 and/or music played by a smartphone to which the device 25 can be connected through the receiver 26. In light of this and similarly to what has been said above, by acting on the rules contained in the memory 10 and on the parameters contained in the memory 12, it is possible to configure the units 9 and 11 in such a way that a determined movement suffered by the device 25 as a result of a motor act voluntarily performed by a person with his head while wearing the device 25, determines, via the unit 13 and by way of example, a raising or lowering of the audio of the receiver 26 (by adjusting the gain of the amplifier 27) or an emphasis of the human voice within a sound context of a telephone conversation whose audio is received via the receiver 26 (by adjusting the filter 28 so as to attenuate frequencies not related to the human voice).

Incidentally, since device 15 is a variant of device 1, device 25 is also a variant of device 1.

The device 25 may comprise the filter 21 to which are connected the filter 4, the memory 16 and the summer 17 according to what has been said above. In such a case, the summer 17 is suitable to add, at each instant of time and weighted by means of said third coefficient, the electrical signal received by the filter 28 at said instant of time, to the weighted sum, respectively by means of the previously mentioned first and second coefficients, between the electrical signal received by the filter 21 at said instant of time and the electrical signal received by the memory 16 at said instant of time. The amplifier 5 is suitable for receiving and amplifying the weighted sum, by means of the aforementioned first, second and third coefficients, between the electrical signals received by the summer 17 from the filter 21, the electrical signals received by the summer 17 from the memory 16 and the electrical signals received by the summer 17 from the filter 28.

According to a variant of the device 25, the latter is devoid of the memory 26. The summer 17, according to this variant and in view of the foregoing, is connected to the filter 4, or to the filter 21, if any, and to the filter 28, and is suitable for performing a weighted sum, respectively by means of said first and third coefficients, between the electrical signals received (directly) by the filter 4, or by the filter 21, if any, and the electrical signals received by the filter 28.

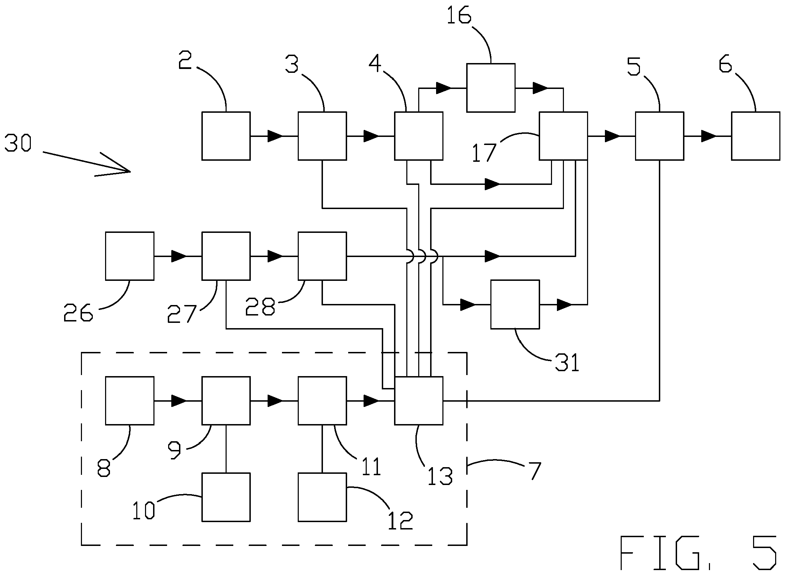

**Figure 5** shows a device 30 which differs from the device 25 in that it includes a "delay line" between the filter 28 and the summer 17. More precisely, the device 30, in addition to what is included in the device 25, includes a fourth memory 31 connected to the filter 28 and suitable for containing the electrical signals as filtered by the filter 28 (i.e., emitted by the latter) continuously and in the same time order in which said electrical signals are emitted by the filter 28. The memory 31 is also suitable to keep stored for a second period of time the said electrical signals emitted by the filter 28, and is managed according to the FIFO method. In view of this, upon an emission of an electrical signal by the filter 28 at a third time instant, the memory 31,
containing the electrical signals emitted by the filter 28 during a time interval having a duration coincident with that of said second time interval and terminating in a fourth time instant immediately preceding said third time instant,
- stores the electrical signal emitted by filter 28 in the above mentioned third time instant
   and
- emits the electrical signal stored (previously) in the memory 31 at the instant of time when the above time interval began.

Incidentally, the (second) time lapse for which the memory 31 is suitable for storing the electrical signals emitted by the filter 28 could coincide with the (first) time lapse for which the memory 16 is suitable for storing the electrical signals emitted by the filter 4, or by the filter 21, if present. More precisely, and by way of example, if the said second time frame, like the first time frame, has a duration of three seconds, upon an emission of an electrical signal from the filter 28 at the second 10, the memory 31,
containing the electrical signals emitted by filter 28 at seconds 7, 8 and 9, i.e. during a time interval having a duration of three seconds and ending at second 9 (immediately preceding second 10),
- stores the electrical signal emitted by the filter 28 to the second 10
   and
- emits the electrical signal stored (previously) in memory 31 at second 7 (i.e. at the instant of time when the above time interval began).

The summer 17, in addition to being connected to the filter 28 for receiving the electrical signals emitted by the same, is connected to the memory 31 for receiving the electrical signals emitted by the latter. The summer 17 is suitable to carry out, in each instant of time, a sum between the electrical signal emitted by the filter 28 and the electrical signal emitted by the memory 31 in said instant of time. Said sum carried out by the summer 17 between the electrical signals emitted by the filter 28 and the electrical signals emitted by the memory 31 is weighted by means of the third coefficient associated with the electrical signals received (directly) by the filter 28, and a fourth coefficient associated with the electrical signals received by the memory 31.

Each of said third and fourth coefficients has a value of zero whenever the other of said third and fourth coefficients has a value other than zero. In view of this and the foregoing, according to this variant of the device 1, the amplifier 5 is suitable for receiving the electrical signals emitted by the filter 28 and weighted by means of the third coefficient, and, but not simultaneously, the electrical signals emitted by the memory 31 and weighted by means of the fourth coefficient. Incidentally, the electrical signals emitted by the memory 31 are electrical signals previously emitted by the filter 28.

The summer 17 is also suitable for performing, at each instant of time, a weighted sum, respectively by means of the previously mentioned first, second, third and fourth coefficients, between the electrical signal received by the filter 4 at said instant of time, the electrical signal received by the memory 16 at said instant of time, the electrical signal received by the filter 28 at said instant of time and the electrical signal received by the memory 31 at said instant of time. Therefore, the amplifier 5 is suitable for receiving and amplifying the weighted sum, by means of said first, second, third and fourth coefficients, between the electrical signals received by the summer 17 from the filter 4, the electrical signals received by the summer 17 from the memory 16, the electrical signals received by the summer 17 from the filter 28 and the electrical signals received by the summer 17 from the memory 31.

Unit 13 is suitable for adjusting the value assumed by the aforementioned fourth coefficient.

Acting on the rules contained in the memory 10 and on the parameters contained in the memory 12, it is advantageously possible to configure the units 9 and 11 in such a way that a determined movement undergone by the device 30 as a result of a motor act voluntarily performed by a person with his head while wearing the device 30 determines, via the unit 13 and by way of example, an interruption of the retransduction into acoustic signals of electrical signals in which electromagnetic waves (currently) received by the receiver 26 are transduced, and simultaneously a retransduction into acoustic signals of electrical signals contained in the memory 31 (and therefore in which electromagnetic waves previously received by the receiver 26 have been transduced), by adjusting the value assumed by the third and fourth coefficients. In other words, it is advantageously possible to command the device 30 to reproduce an audio previously received by the receiver 26, encoded in electromagnetic waves (i.e., to make the user of the device 30 "listen again" to said audio).

By appropriately configuring units 9 and 11 (via memories 10 and 12), it is also possible to cause the aforementioned command to have an audio previously received by receiver 26, encoded in electromagnetic waves, replayed by unit 13 whenever unit 11 ascertains that device 30 has undergone a certain movement as a result of a certain involuntary movement of a person's head, typically signifying the failure to understand one or more words during a telephone conversation taking place via a cell phone or smartphone to which the receiver 26 is connectable, and/or while listening to audio played by said phone or smartphone.

Incidentally, since device 25 is a variant of device 1, device 30 is also a variant of device 1.

The device 30, like the device 25, may comprise the filter 21 to which are connected the filter 4, the memory 16 and the summer 17 according to what has been said previously. In this case, the summer 17 is suitable to carry out, in each instant of time, a weighted sum, respectively by means of the previously mentioned first, second, third and fourth coefficients, between the electrical signal received by the filter 21 in said instant of time, the electrical signal received by the memory 16 in said instant of time, the electrical signal received by the filter 28 in said instant of time and the electrical signal received by the memory 31 in said instant of time. Therefore, the amplifier 5 is suitable for receiving and amplifying the weighted sum, by means of said first, second, third and fourth coefficients, between the electrical signals received by the summer 17 from the filter 21, the electrical signals received by the summer 17 from the memory 16, the electrical signals received by the summer 17 from the filter 28 and the electrical signals received by the summer 17 from the memory 31.

According to a variant of the device 30, the latter is devoid of the memory 26. The summer 17, according to this variant and in view of the foregoing, is connected to the filter 4, or to the filter 21, if any, to the filter 28 and to the memory 31, and is suitable for performing a weighted sum, respectively by means of said first, third and fourth coefficients, between the electrical signals received (directly) by the filter 4, or by the filter 21, if any, the electrical signals received by the filter 28 and the electrical signals received by the memory 31.

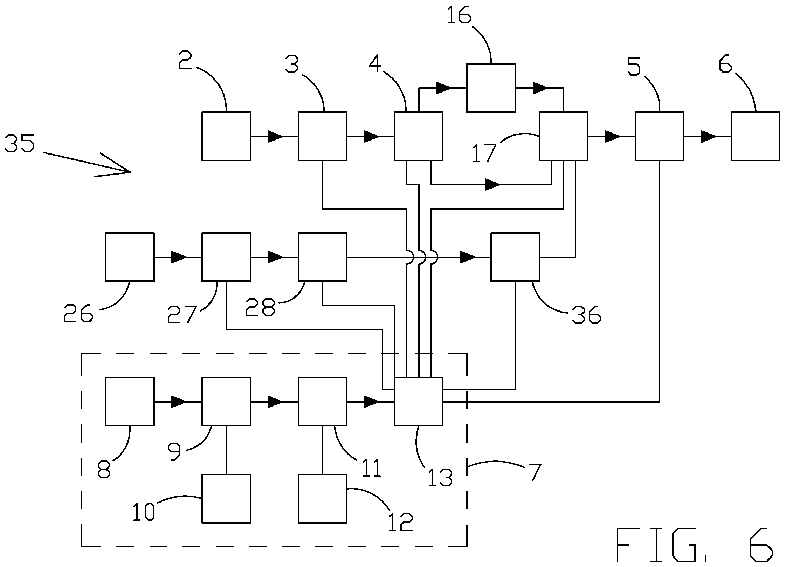

**Figure** 6 shows a device 35 that differs from the device 25 in that it includes, in addition to what is included in the device 25, a fourth frequency filter 36 between the filter 28 and the summer 17. The filter 36 is a frequency filter with a non-linear and/or time dependent response. The filter 36 is connected to the filter 28 and is suitable for further filtering the electrical signals as filtered by the filter 28. The summer 17 is connected to the filter 36 for receiving electrical signals as filtered by the latter. The summer 17, in contrast to the device 25, is connected to the filter 28 not directly, but exclusively through at least the filter 36, so that the summer 17 is suitable for performing said weighted summing with the electrical signals emitted by the filter 28 exclusively as further filtered by at least the filter 36. Therefore, the summer 17 uses as an addend the electrical signals as filtered by the filter 36 instead of the electrical signals as filtered (only) by the filter 28.

The filter 36 may also be installed in the device 30. In this case, the memory 31, like the summer 17, is connected to the filter 36 for receiving electrical signals as filtered by the latter. According to this variant, the memory 31 is connected to the filter 4 not directly, but exclusively by means of at least the filter 36, so that the memory 31 is suitable for storing, keeping stored for the said second time frame and outputting the electrical signals as filtered by the filter 28 exclusively as further filtered by the filter 36. Thus, the memory 31 contains the electrical signals as filtered by the filter 36 rather than the electrical signals as filtered (only) by the filter 28. Incidentally, since the device 25 is a variant of the device 1, the device 35 is also a variant of the device 1.

The device 35 may comprise the filter 21 to which the filter 4, the memory 16 and the summer 17 are connected according to the foregoing.

According to a variant of the device 35, the latter is devoid of the memory 26. The summer 17, according to this variant and in view of the foregoing, is connected to the filter 4, or to the filter 21, if any, to the filter 36 and to the memory 31, and is suitable for performing a weighted sum, respectively by means of said first, third and fourth coefficients, between the electrical signals received (directly) by the filter 4, or by the filter 21, if any, the electrical signals received by the filter 36 and the electrical signals received by the memory 31.

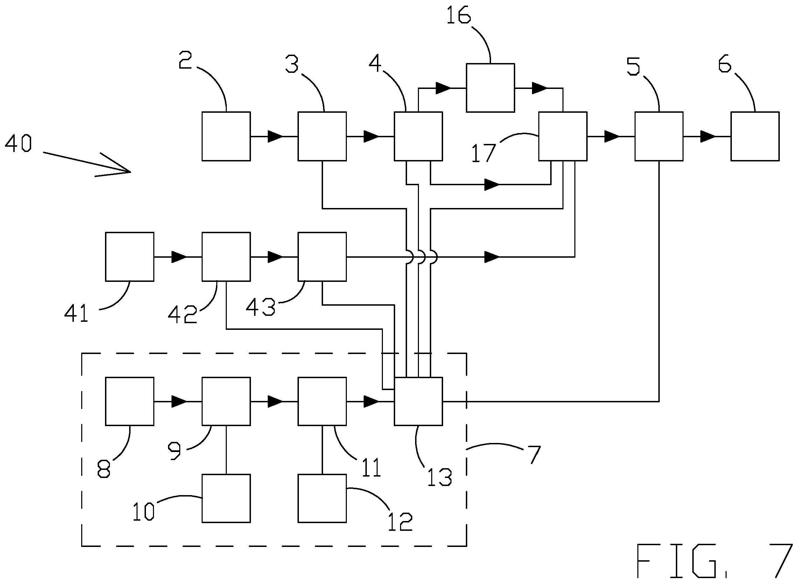

**Figure** 7 shows a device 40 which differs from the device 15 in that it comprises, in addition to what is included in the device 15, a second acoustic receiver 41 preferably corresponding to a microphone and suitable for acquiring acoustic signals from an environment external to the device 40, and for transducing said acoustic signals into electrical signals. The receiver 41 is placed in the device 40 in such a way that, when the device 40 is applied to a person at a person's ear, the receiver 41 is suitable for receiving acoustic signals diffusing throughout the external ear canal of said ear. In other words, the receiver 41 is placed in the device 40 such that, when the device 40 is applied to a person at one ear thereof, the external environment from which the receiver 41 is eligible to receive acoustic signals is within the external ear canal of said ear.

The device 40 also includes a fourth variable gain amplifier 42 connected to the receiver 41 and suitable for amplifying the electrical signals into which the receiver 41 transduces the acoustic signals from the external environment. The amplifier 42 is connected to a fifth frequency filter 43 suitable for filtering said electrical signals as amplified by the amplifier 42. The latter is suitable for subtracting, at each instant of time and weighted by means of a fifth coefficient, the electrical signal received by the filter 43 at said instant of time, from the weighted sum, respectively by means of the previously mentioned first and second coefficients, between the electrical signal received by the filter 4 at said instant of time and the electrical signal received by the memory 16 at said instant of time. The amplifier 5 is therefore suitable for receiving and amplifying the weighted sum, by means of the previously mentioned first and second coefficients, between the electrical signals received by the summer 17 from the filter 4 and the electrical signals received by the summer 17 from the memory 16, from which the electrical signals received by the summer 17 from the filter 43 and weighted by means of the fifth coefficient have been subtracted.

The unit 13 is connected to the amplifier 42 and is suitable for adjusting the gain of the latter. The unit 13 is also connected to the filter 43 and is suitable for adjusting both the frequencies attenuated by the filter 43 and the degree of attenuation of each of the frequencies attenuated by the filter 43. Unit 13 also adjusts the value of the fifth coefficient.

Similar to amplifier 3 and filter 4, the unit 13, by adjusting the gain of the amplifier 42 can cause the audio from the receiver 41 to be raised or lowered. Thus, the amplifier 27 acts as a controller of the sound volume of the acoustic signals acquired by the receiver 41. In addition, the unit 13, by acting on the filter 43, may highlight certain frequency ranges of the electrical signals imparted to the filter 43 by the amplifier 42. Thus, the filter 43 acts as an equalizer.

The device 40 is eligible to implement the well-known "active noise cancellation" mechanism.

Incidentally, since device 15 is a variant of device 1, device 40 is also a variant of device 1.

The device 40 may comprise the filter 21 to which are connected the filter 4, the memory 16 and the summer 17 according to what has been said above. In this case, the summer 17 is suitable for subtracting, at each instant of time and weighted by means of said fifth coefficient, the electrical signal received by the filter 43 at said instant of time, from the weighted sum, respectively by means of the previously mentioned first and second coefficients, between the electrical signal received by the filter 21 at said instant of time and the electrical signal received by the memory 16 at said instant of time. The amplifier 5 is suitable for receiving and amplifying the weighted sum, by means of the aforementioned first and second coefficients, between the electrical signals received by the summer 17 from the filter 21 and the electrical signals received by the summer 17 from the memory 16, from which the electrical signals received by the summer 17 from the filter 43 have been subtracted and weighted by means of the fifth coefficient.

The device 40 may comprise the receiver 26 connected to the amplifier 27 in turn connected to the filter 28 in turn connected to the summer 17 according to what has been said above. In this case, the summer 17 is suitable for subtracting, at each instant of time and weighted by means of said fifth coefficient, the electrical signal received by the filter 43 at said instant of time, from the weighted sum, respectively by means of the previously mentioned first, second and third coefficients, between the electrical signal received by the filter 4, or by the filter 21, if present, at said instant of time, the electrical signal received by the memory 16 at said instant of time and the electrical signal received by the filter 28 at said instant of time. The amplifier 5 is suitable for receiving and amplifying the weighted sum, by means of said first, second and third coefficients, between the electrical signals received from the summer 17 by the filter 4, or by the filter 21, if any, the electrical signals received from the summer 17 by the memory 16 and the electrical signals received from the summer 17 by the filter 28, from which (weighted sum) have been subtracted the electrical signals received from the summer 17 by the filter 43 and weighted by means of the fifth coefficient.

The device 40 may comprise the memory 31 to which the filter 28 and the summer 17 are connected according to what has been said above. In this case, the summer 17 is capable of subtracting, at each instant of time and weighted by means of said fifth coefficient, the electrical signal received by the filter 43 at said instant of time, from the sum weighted, respectively, by means of the previously mentioned first, second, third and fourth coefficients, between the electrical signal received by the filter 4, or by the filter 21, if any, at said instant of time, the electrical signal received by the memory 16 at said instant of time, the electrical signal received by the filter 28 at said instant of time and the electrical signal received by the memory 31 at said instant of time. The amplifier 5 is suitable for receiving and amplifying the weighted sum, by means of said first, second, third and fourth coefficients, between the electrical signals received by the summer 17 from the filter 4, or by the filter 21, if any, the electrical signals received by the summer 17 from the memory 16, the electrical signals received by the summing unit 17 from the filter 28, and the electrical signals received by the summing unit 17 from the memory 31, from which the electrical signals received by the summing unit 17 from the filter 43 have been subtracted and weighted by means of the fifth coefficient.

The device 40 may comprise the filter 36 to which are connected the filter 28, the summer 17 and, if present, the memory 31, according to what has been said above. In this case, the summer 17 is suitable for subtracting, at each instant of time and weighted by means of said fifth coefficient, the electrical signal received by the filter 43 at said instant of time, from the sum of the electrical signal received by the filter 4, or by the filter 21, if present, at said instant of time and weighted by means of said first coefficient, the electrical signal received by the memory 16 at said instant of time and weighted by means of the second coefficient, the electrical signal received by the filter 36 at said instant of time and weighted by means of the third coefficient, and the electrical signal received by the memory 31, if any, at said instant of time and weighted by means of the fourth coefficient. The amplifier 5 is suitable for receiving and amplifying the weighted sum between the electrical signals received by the summer 17 from the filter 4, or from the filter 21, if present, and weighted by means of the first coefficient, the electrical signals received by the summer 17 from the memory 16 and weighted by means of the second coefficient, the electrical signals received by the summer 17 from the filter 36 and weighted by means of the third coefficient, and the electrical signals received by the summer 17 from the memory 31, if any, and weighted by means of the fourth coefficient, from which the electrical signals received by the summer 17 from the filter 43 were subtracted and weighted by means of the fifth coefficient.

According to a variant of the device 40, the latter is devoid of the memory 26. The summer 17, therefore, according to this variant and in light of the foregoing, is connected, in addition to the filter 43:
- to filter 4, or filter 21, if present,
- if receiver 26, amplifier 27, and filter 28 are present, to filter 28, or filter 36, if present,
- to memory 31, if any
and is eligible for a sum between:
- the electrical signals received (directly) by filter 4, or by filter 21, if present, weighted by the above first coefficient,
- if receiver 26, amplifier 27 and filter 28 are present, the electrical signals received by filter 28 weighted by the above third coefficient,
- the electrical signals received by memory 31, if any, weighted by the above fourth coefficient,
   subtracting
- the electrical signals received by the filter 43 weighted by the aforementioned fifth coefficient.

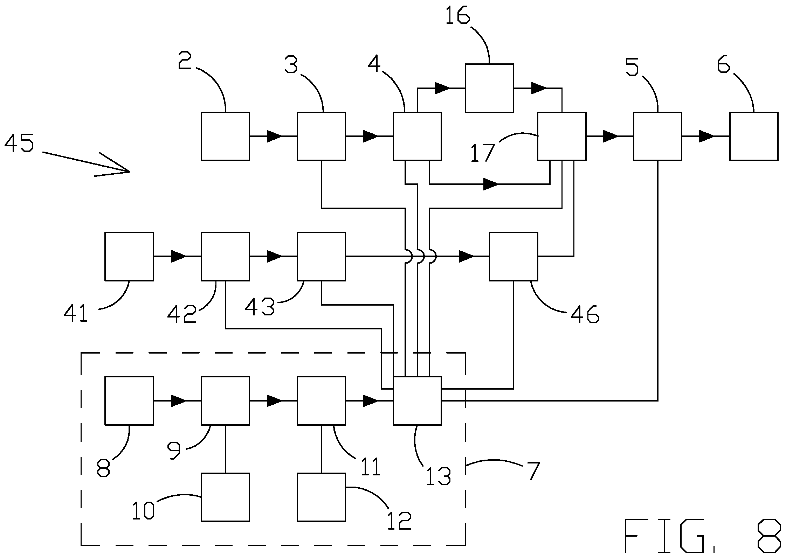

**Figure** 8 shows a device 45 that differs from the device 40 in that it includes, in addition to what is included in the device 40, a sixth frequency filter 46 between the filter 43 and the summer 17. The filter 46 is a frequency filter with a non-linear and/or time dependent response. The filter 46 is connected to the filter 43 and is suitable for further filtering the electrical signals as filtered by the filter 43. The summer 17 is connected to the filter 43 for receiving electrical signals as filtered by the filter 43. The summer 17, in contrast to the device 40, is connected to the filter 43 not directly, but exclusively through at least the filter 46, so that the summer 17 is suitable for performing said weighted summing with the electrical signals emitted by the filter 43 exclusively as further filtered by at least the filter 46. Therefore, the summer 17 uses as addend the electrical signals as filtered by the filter 46 instead of the electrical signals as filtered (only) by the filter 43.

The device 45, like the device 40, may comprise the filter 21 to which the filter 4, the memory 16 and the summer 17 are connected according to the foregoing. The device 45, like the device 40, may comprise the receiver 26 connected to the amplifier 27 in turn connected to the filter 28 in turn connected to the summer 17 according to the foregoing.

The device 45, like the device 40, may comprise the memory 31 to which the filter 28 and the summer 17 are connected according to the foregoing.

The device 45, like the device 40, may comprise the filter 36 to which the filter 28, the summer 17 and, if present, the memory 31 are connected, according to the foregoing.

According to a variant of the device 45, the latter is devoid of the memory 26. The summer 17, therefore, according to this variant and in light of the foregoing, is connected, in addition to the filter 46:
- to filter 4, or filter 21, if present,
- if receiver 26, amplifier 27, and filter 28 are present, to filter 28, or filter 36, if present,
- to memory 31, if any
and is eligible for a sum between:
- the electrical signals received (directly) by filter 4, or by filter 21, if present, weighted by the above first coefficient,
- if receiver 26, amplifier 27 and filter 28 are present, the electrical signals received by filter 28 weighted by the above third coefficient,
- the electrical signals received by memory 31, if any, weighted by the above fourth coefficient,
   subtracting
- the electrical signals received by the filter 46 weighted by the aforementioned fifth coefficient.

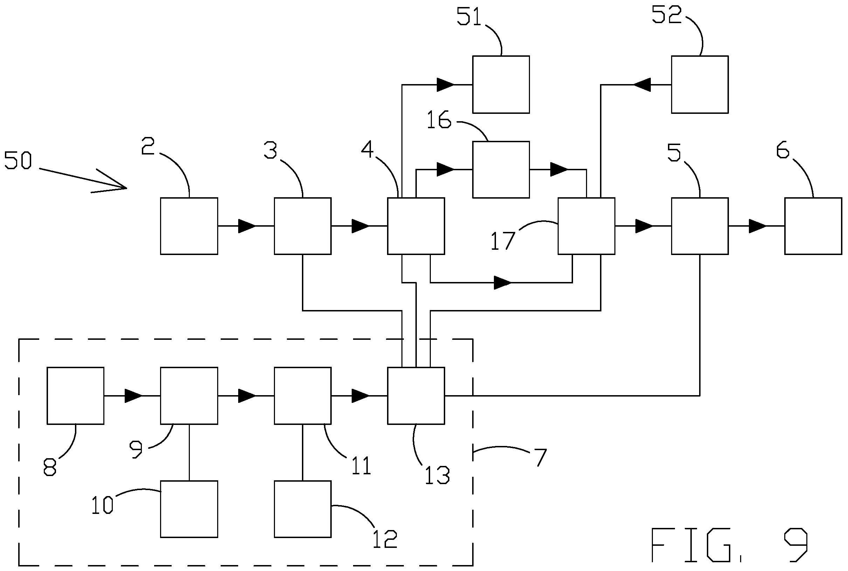

**Figure** 9 shows a device 50 that differs from the device 15 in that it includes, in addition to what is included in the device 15, an electromagnetic transmitter 51 connected to the filter 4. The transmitter 51 preferably includes an antenna and is suitable both for transducing into radio frequency electromagnetic waves the electrical signals as filtered by the filter 4, and for emitting into an environment external to the device 50 the electromagnetic waves into which the transmitter 51 transduces said electrical signals. The device 50 further comprises a second electromagnetic receiver 52 suitable for receiving radio frequency electromagnetic waves preferably emitted by the transmitter 51 of another device 50. The receiver 52 is also suitable for transducing into electrical signals the electromagnetic waves received by the same.

The receiver 52 imparts to the summer 17 the electrical signals into which it has transduced the received electromagnetic waves. The summer 17 is suitable to add, at each instant of time and weighted by means of a sixth coefficient, the electrical signal possibly received by the receiver 52 at said instant of time, to the weighted sum, respectively by means of the previously mentioned first and second coefficients, between the electrical signal received by the filter 4 at said instant of time and the electrical signal received by the memory 16 at said instant of time. Therefore, the amplifier 5 is suitable for receiving and amplifying the weighted sum, by means of the previously mentioned first, second and sixth coefficients, between the electrical signals received by the summer 17 from the filter 4, the electrical signals received by the summer 17 from the memory 16 and the electrical signals received by the summer 17 from the receiver 52.

Unit 13 is also suitable for adjusting the value assumed by the aforementioned sixth coefficient.

A person may be provided with a pair of devices 50 (one applicable at each ear), and the unit 13 of each of said two devices 50 may or may not include in the audio output from the player 6 of said device 50, acoustic signals of the external environment acquired by the receiver 2 of the other of said two devices 50 (amplified and filtered by the amplifier 3 and filter 4, and possibly filter 21, of said other device 50, respectively).

The device 50 may comprise the filter 21 to which the filter 4, the memory 16 and the summer 17 are connected according to the foregoing. In this case, the transmitter 51 is connected to the filter 21 and is suitable for transducing into radio frequency electromagnetic waves the electrical signals as filtered by the filter 21, rather than (only) by the filter 4, i.e., the electrical signals as filtered by the filter 4 and further filtered by the filter 21. The summer 17 is also suitable to add, at each instant of time and weighted by means of the aforesaid sixth coefficient, the electrical signal possibly received by the receiver 52 at said instant of time, to the weighted sum, respectively by means of the aforesaid first and second coefficients, between the electrical signal received by the filter 21 at said instant of time and the electrical signal received by the memory 16 at said instant of time. The amplifier 5 is suitable for receiving and amplifying the weighted sum, by means of the aforementioned first, second and sixth coefficients, between the electrical signals received by the summer 17 from the filter 21, the electrical signals received by the summer 17 from the memory 16 and the electrical signals received by the summer 17 from the receiver 52.

The device 50 may comprise the receiver 26 connected to the amplifier 27 in turn connected to the filter 28 in turn connected to the summer 17 according to what has been said above. In such a case, the summer 17 is suitable to add, at each instant of time and weighted by means of said sixth coefficient, the electrical signal possibly received by the receiver 52 at said instant of time, to the weighted sum, respectively by means of the previously mentioned first, second and third coefficients, between the electrical signal received by the filter 4, or by the filter 21, if present, at said instant of time, the electrical signal received by the memory 16 at said instant of time and the electrical signal received by the filter 28 at said instant of time. The amplifier 5 is suitable for receiving and amplifying the weighted sum, by means of said first, second, third and sixth coefficients, between the electrical signals received by the summer 17 from the filter 4, or by the filter 21, if any, at said time instant, the electrical signals received by the summer 17 from the memory 16, the electrical signals received by the summer 17 from the filter 28 and the electrical signals received by the summer 17 from the receiver 52.

The device 50 may comprise the memory 31 to which the filter 28 and the summer 17 are connected according to what has been said above. In such a case, summer 17 is suitable to sum, at each instant of time and weighted by means of said sixth coefficient, the electrical signal possibly received by receiver 52 at said instant of time, to the weighted sum, respectively by means of the previously mentioned first, second, third and fourth coefficients, between the electrical signal received by the filter 4, or by the filter 21, if any, at said instant of time, the electrical signal received by the memory 16 at said instant of time, the electrical signal received by the filter 28 at said instant of time and the electrical signal received by the memory 31 at said instant of time. The amplifier 5 is suitable for receiving and amplifying the weighted sum, by means of said first, second, third, fourth and sixth coefficients, between the electrical signals received by the summer 17 from the filter 4, or from the filter 21, if any, the electrical signals received by the summer 17 from the memory 16, the electrical signals received by the summer 17 from the filter 28, the electrical signals received by the summer 17 from the memory 31 and the electrical signals received by the summer 17 from the receiver 52.

The device 50 may comprise the filter 36 to which are connected the filter 28, the summer 17 and, if present, the memory 31, according to what has been said above. In this case, the summer 17 is suitable for summing, at each instant of time and weighted by means of said sixth coefficient, the electrical signal, if any, received by the receiver 52 at said instant of time, to the sum of the electrical signal received by the filter 4, or by the filter 21, if any, at said instant of time and weighted by means of said first coefficient, the electrical signal received by the memory 16 at said instant of time and weighted by means of the second coefficient, the electrical signal received by the filter 36 at said instant of time and weighted by means of the third coefficient, and the electrical signal received by the memory 31, if any, at said instant of time and weighted by means of the fourth coefficient. The amplifier 5 is suitable for receiving and amplifying the sum of the electrical signals received by the summer 17 from the filter 4, or from the filter 21, if present, weighted by means of the first coefficient, the electrical signals received by the summer 17 from the memory 16 and weighted by means of the second coefficient, the electrical signals received by the summer 17 from the filter 36 and weighted by means of the third coefficient, the electrical signals received by the summer 17 from the memory 31, if any, and weighted by means of the fourth coefficient, and the electrical signals received by the summer 17 from the receiver 52 and weighted by means of the sixth coefficient. The device 50 may comprise the receiver 41 connected to the amplifier 42 connected in turn to the filter 43 in turn connected to the summer 17 according to what has been said above. In such a case, the summer 17 is suitable to add, at each instant of time and weighted by means of the aforementioned sixth coefficient, the electrical signal possibly received by the receiver 52 at said instant of time, to the sum between:
- the electrical signal received by filter 4, or by filter 21, if any, at that instant of time and weighted by the first coefficient,
- the electrical signal received by memory 16 at said instant of time and weighted by means of the second coefficient,
- if the receiver 26, the amplifier 27 and the filter 28 are present, the electrical signal received by the filter 28, or by the filter 36, if present, at that instant of time is weighted by the third coefficient,
- the electrical signal received by memory 31, if any, at said instant of time and weighted by means of the fourth coefficient,
from which is subtracted the electrical signal received by the filter 43 weighted by the fifth coefficient.

Amplifier 5 is suitable for receiving and amplifying the sum between:
- the electrical signals received by the summer 17 from the filter 4, or from the filter 21, if any, and weighted by the first coefficient,
- the electrical signals received by the summing machine 17 from the memory 16 and weighted by the second coefficient,
- if the receiver 26, amplifier 27 and filter 28 are present, the electrical signals received by the summer 17 from the filter 28, or from the filter 36, if present, and weighted by the third coefficient,
- The electrical signals received by the summing machine 17 from the memory 31, if any, and weighted by means of the fourth coefficient
- The electrical signals received by the summing machine 17 from the receiver 52 and weighted by means of the sixth coefficient,
from which are subtracted the electrical signals received by the summer 17 from the filter 43 weighted by the fifth coefficient.

The device 50 may comprise the filter 46 to which the filter 43 and the summer 17 are connected according to what has been said above. In such a case, the summer 17 is suitable for summing, at each instant of time and weighted by means of said sixth coefficient, the electrical signal possibly received by the receiver 52 at said instant of time, to the sum between:
- the electrical signal received by filter 4, or by filter 21, if any, at that instant of time and weighted by the first coefficient,
- the electrical signal received by memory 16 at said instant of time and weighted by means of the second coefficient,
- if the receiver 26, the amplifier 27 and the filter 28 are present, the electrical signal received by the filter 28, or by the filter 36, if present, at that instant of time is weighted by the third coefficient,
- the electrical signal received by the memory 31, if any, at said instant of time and weighted by means of the fourth coefficient,
from which is subtracted the electrical signal received by the filter 46 weighted by the fifth coefficient.

Amplifier 5 is suitable for receiving and amplifying the sum between:
- the electrical signals received by the summer 17 from the filter 4, or from the filter 21, if any, and weighted by the first coefficient,
- the electrical signals received by the summing machine 17 from the memory 16 and weighted by the second coefficient,
- if the receiver 26, amplifier 27 and filter 28 are present, the electrical signals received by the summer 17 from the filter 28, or from the filter 36, if present, and weighted by the third coefficient,
- The electrical signals received by the summing machine 17 from the memory 31, if any, and weighted by means of the fourth coefficient
- The electrical signals received by the summing machine 17 from the receiver 52 and weighted by means of the sixth coefficient,
from which are subtracted the electrical signals received by the summer 17 from the filter 46 weighted by the fifth coefficient.

According to a variant of the device 50, the latter is devoid of the memory 26. The summer 17, therefore, according to this variant and in light of the foregoing, is connected in addition to the receiver 52:
- to filter 4, or filter 21, if present,
- if receiver 26, amplifier 27, and filter 28 are present, to filter 28, or filter 36, if present,
- to memory 31, if any,
- if receiver 41, amplifier 42, and filter 43 are present, to filter 43, or filter 46, if present,
and is eligible for a sum between:
- the electrical signals received (directly) by filter 4, or by filter 21, if present, weighted by the above first coefficient,
- if receiver 26, amplifier 27 and filter 28 are present, the electrical signals received by filter 28 weighted by the above third coefficient,
- the electrical signals received by memory 31, if any, weighted by the above fourth coefficient,
- the signals received by the receiver 52, weighted by the sixth coefficient, from which are subtracted, if receiver 41, amplifier 42 and filter 43 are present, the electrical signals received by filter 43, or by filter 46, if present, weighted by means of said fifth coefficient.

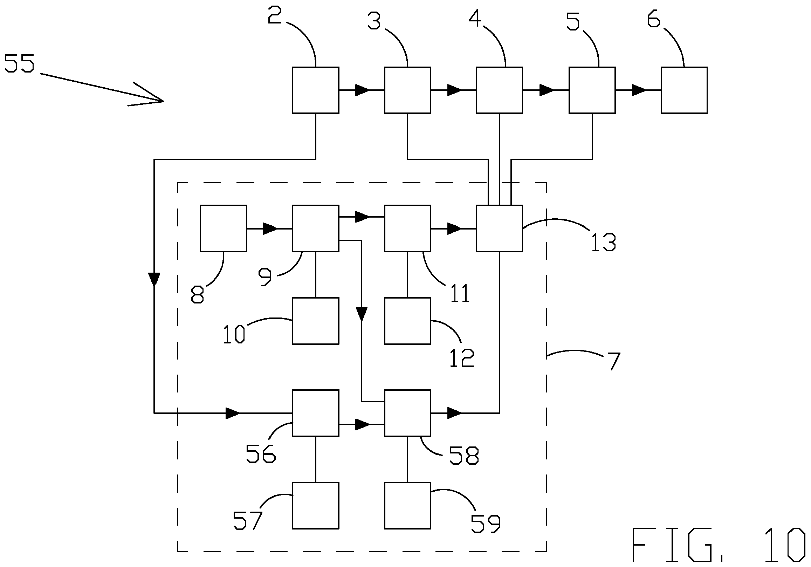

Figure 10 shows a device 55 according to the invention which differs from the device 1 or any of the variants of the device 1 described above, in that it comprises, in addition to what is included in the device 1 or any of the above variants, a second feature extraction unit 56 connected to the receiver 2. The unit 56, like the unit 9, preferably corresponds to a "feature extractor" and is suitable for performing analyses in the time domain and in the frequency domain, on the electrical signals received by the receiver 2 during a time interval, and for generating a vector associated with said time interval and whose elements encode information concerning certain aspects of acoustic signals received by the receiver 2 during the time interval with which the vector is associated. The electrical signals emitted with the passage of time by the receiver 2 therefore result in the generation, by the unit 56, of a succession of said vectors.

The unit 56 is connected to a fifth memory 57 suitable for containing rules on the basis of which the unit 56 is suitable for performing the aforementioned analyses in the time domain and in the frequency domain. The unit 56 is further connected to a second acoustic signal and movement recognition unit 58. The latter, like the unit 11, preferably corresponds to a numerical classifier, more preferably to a neural network and even more preferably to a neural network of the "multilayer perceptron" type. Alternatively, unit 56 may correspond to an expert system. The second acoustic signal and movement recognition unit 58 is also connected to the unit 9 is suitable for performing analyses on the elements of the vectors emitted by the units 9 and 56 so as to determine whether or not acoustic signals with one or more determinate characteristics have been received by the receiver 2 and, if acoustic signals with said one or more determinate characteristics have been received by the receiver 2, whether or not one or more determinate movements of the device 55 have taken place. The unit 11 is further capable of issuing certain commands depending on whether, in the event that acoustic signals having said one or more certain characteristics have been received by the receiver 2, said one or more certain movements of the device 55 have or have not taken place.

Like the unit 56, the unit 58 is connected to a sixth memory 59 suitable for containing parameters on the basis of which the unit 58 is suitable for performing said analyses on the elements of the vectors emitted by the units 9 and 56. **If** the unit 58 corresponds to a numerical classifier, said parameters preferably correspond to synaptic weights and/or transfer functions of a plurality of computational units included in the numerical classifier. If the unit 58 corresponds to an expert system, said parameters preferably correspond to rules applied by the expert system.

The unit 58 is also connected to the execution unit 13, and the latter is suitable for implementing commands issued by the unit 58.

Units 56 and 58 and memories 57 and 59 are preferably included in control unit 7.

By appropriately configuring units 9, 11, 56 and 58 (respectively by means of memories 10, 12, 57 and 59), if device 55 includes memory 16, it is possible to make the above mentioned command to play back acoustic signals previously coming from the external environment to be implemented by unit 13 whenever the external environment generates, for example an acoustic signal whose sound volume is higher than a certain threshold (such as, for example, if an explosion occurs) or an acoustic signal falling within a certain frequency range (such as, for example, if an alarm siren is sounding), and the unit 58 ascertains that the device 55 has not undergone a certain movement which, conversely, it should have undergone as a result of a certain involuntary movement of a person's head, typically signifying having heard the aforementioned acoustic signal. By way of example, units 9, 11, 56 and 58 may be configured such that, if the receiver 2 picks up the noise caused by a deflagration and the unit 58 determines that the wearer of the device 55 has not abruptly and significantly rotated his or her head, the device 55 again reproduces the noise of the deflagration.

Similarly, in case the device 55 includes, in addition to the memory 16, the receiver 26, by appropriately configuring the units 9, 11, 56 and 58, it is also possible to set the third and the fourth coefficients to zero (i.e. to "switch off" the audio of the receiver 26) and that a command to play back acoustic signals previously coming from the external environment is carried out by the unit 13 whenever from the external environment comes an acoustic signal whose sound volume is higher than a certain threshold (as for example if an explosion occurs) or an acoustic signal within a certain frequency range (as for example if an alarm siren is sounding), and the unit 58 ascertains that the device 55 has not undergone a certain movement which, conversely, it should have undergone as a result of a certain involuntary movement of a person's head, typically signifying having heard the aforementioned acoustic signal. By way of example, units 9, 11, 56, and 58 may be configured such that, if the receiver 2 picks up the noise caused by a deflagration and the unit 58 determines that the wearer of the device 55 has not abruptly and significantly rotated his or her head, the device 55 turns off the audio of the receiver 26 and plays the noise of the deflagration again.

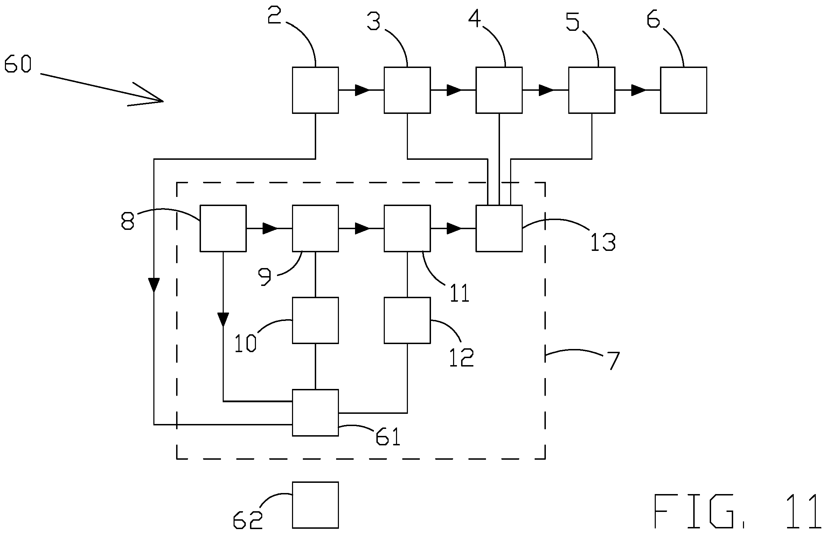

**Figure 11** shows a device 60 which differs from the device 1 or any of the variants of the device 1 described above, in that it comprises, in addition to what is included in the device 1 or any of the above variants, a configuration unit 61 connected to the unit 8, the memories 10 and 12 and preferably also to the microphone 2. The unit 61 is suitable for receiving electrical signals emitted by the unit 8 and the microphone 2, if also connected to the latter. The unit 61 is also suitable to modify the rules stored in the memory 10 and the parameters stored in the memory 12.

The unit 61 is suitable for connecting, preferably wirelessly, to the Internet network and/or to an electronic bridge device 62 connectable to the Intenet network, such as a smartphone. Incidentally, when the unit 61 is connected to said electronic bridging device 62 and the latter is connected to the Internet network, the unit 61 is connected to the Internet network via said electronic bridging device 62.

Unit 61, when connected to the Internet network, is capable of receiving via the Internet network and implementing commands to modify the rules stored in memory 10 and commands to modify the parameters stored in memory 12.

The unit 61, when connected to the Internet network, is also able to transmit through the Internet network information concerning the electrical signals received by the unit 8, information concerning the electrical signals received by the receiver 2, if connected also to the latter, the rules stored in the memory 10 and the parameters stored in the memory 12.

The unit 61 is preferably included in the control unit 7.

A user of the device may himself modify and/or configure the controls operable by the unit 13 by means of, by way of example, interface software installed on the electronic bridge device 62 or on a personal computer connected to the Internet network. If the electronic bridge device 62 is a smartphone, the interface software is preferably an "app" installed on said smartphone. Again by way of example, a user of the device 60 may configure the device 60 such that a certain movement of the head (resulting in a movement of the device 60 when the device 60 is worn by said user) results in the execution of a certain command, such as a command to immediately stop the emission of acoustic signals from the player 6.

The device 60 may comprise the units 56 and 58 and the memories 57 and 59 according to the foregoing. In this case, the unit 61 is preferably also connected to the memories 57 and 59, and is preferably also suitable for modifying the rules stored in the memory 57 and the parameters stored in the memory 59. The unit 61, when connected to the Internet network, is also preferably suitable for receiving via the Internet network and implementing commands to modify the rules stored in the memory 57 and commands to modify the parameters stored in the memory 59. Finally, the unit 61, when connected to the Internet network, is preferably also suitable for transmitting via the Internet network the rules stored in the memory 57 and the parameters stored in the memory 59.

In addition to the foregoing, by means of artificial intelligence systems e.g., installed on a server connected to the Internet network and by connecting the device 60 to the Internet network at least periodically, it is possible to create a substantially "adaptive" system, i.e., capable of autonomously updating the rules of the unit 9 and the unit 56, if present, and the parameters of the unit 11 and the unit 58, if present, by autonomously learning commands intentionally associated with a movement and/or commands from unintentional micromovements.

The scope of the invention is solely defined by the set of appended claims.

## Claims

1. Device (15, 20, 25, 30, 35, 40, 45, 50, 55) applicable to a person in correspondence with one ear of the same,
said device (15, 20, 25, 30, 35, 40, 45, 50, 55) comprising:
• a first acoustic receiver (2) suitable for:
- receiving acoustic signals from an external environment to said device (15, 20, 25, 30, 35, 40, 45, 50, 55)
and for
- transducing said acoustic signals received by said first acoustic receiver (2) into electrical signals,
said first acoustic receiver (2) being arranged in such a way that when said device (15, 20, 25, 30, 35, 40, 45, 50, 55) is applied to a person onto an ear of the same, said external environment from which said first acoustic receiver (2) is suitable for receiving acoustic signals is external also to the external auditory canal of said ear;
• a first variable gain amplifier (3) connected to said first acoustic receiver (2) and suitable for amplifying said electrical signals in which said first acoustic receiver (2) transduces said acoustic signals;
• a first frequency filter (4) connected to said first amplifier (3) and suitable for filtering said electrical signals as amplified by said first amplifier (3);
• a second variable gain amplifier (5) connected to said first filter (4) and suitable for amplifying said electrical signals as filtered by said first filter (4);
• at least one audio player (6) connected to said second amplifier (5) and suitable for:
- transducing into acoustic signals said electrical signals as amplified by said second amplifier (5)
and for
- emitting in an environment external to said device (15, 20, 25, 30, 35, 40, 45, 50, 55) said acoustic signals into which said audio player (6) transduces said electrical signals as amplified by said second amplifier (5),
said audio player (6) being arranged in such a way that when said device (15, 20, 25, 30, 35, 40, 45, 50, 55) is applied to a person in correspondence with an ear of the same, said external environment into which said audio player (6) is suitable for emitting acoustic signals is internal to the external auditory canal of said ear;
• control means (7) connected to:
- said first amplifier (3) and suitable for adjusting a gain of said first amplifier (3);
- said first filter (4) and suitable for regulating both frequencies attenuated by said first filter (4), and a degree of attenuation of each of the frequencies attenuated by said first filter (4);
- said second amplifier (5) and suitable for adjusting a gain of said second amplifier (5),
said control means (7) comprising:
- a movement detection unit (8) suitable for:
➢ detecting a movement of said device (15, 20, 25, 30, 35, 40, 45, 50, 55) and for
➢ continuously emitting electrical signals as a function of time, encoding information concerning any movements of said device (15, 20, 25, 30, 35, 40, 45, 50, 55);
- a first feature extraction unit (9) connected to said detection unit (8), said first extraction unit (9) being suitable for carrying out analyses in the time domain and in the frequency domain, on said electrical signals received by said detection unit (8) during a time interval, for generating a vector associated with said time interval and whose elements encode information concerning certain aspects of one or more possible movements of said device (15, 20, 25, 30, 35, 40, 45, 50, 55) during said time interval to which said vector is associated,
so that electrical signals emitted continuously and as a function of time by said detection unit (8) determine over time a generation of a succession of said vectors by said first extraction unit (9);
- a first memory (10) connected to said first extraction unit (9) and suitable for storing rules on the basis of which said first extraction unit (9) is suitable for carrying out said analyzes in the time domain and in the frequency domain;
- a first movement recognition unit (11) connected to said first extraction unit (9),
said first recognition unit (11) being suitable for:
➢ carry out analyses on the elements of said vectors emitted by said first extraction unit (9) in order to establish whether or not one or more among certain movements of said device have taken place (15, 20, 25, 30, 35, 40, 45, 50, 55)
and for
➢ issuing certain commands of adjusting the gain of said first amplifier (3), of regulating the frequencies attenuated by said first filter (4), of regulating the degree of attenuation of each of the frequencies attenuated by said first filter (4) and of adjusting the gain of said second amplifier (5), depending on whether or not said one or more certain movements of said device have taken place (15, 20, 25, 30, 35, 40, 45, 50, 55);
- a second memory (12) connected to said first recognition unit (11) and suitable for storing parameters on the basis of which said first recognition unit (11) is suitable for carrying out said analyses on the elements of said vectors emitted by said first extraction unit (9);
- an execution unit (13) connected to:
➢ said first amplifier (3) and suitable for adjusting the gain of said first amplifier (3);
➢ said first filter (4) and suitable for regulating both the frequencies attenuated by said first filter (4), and the degree of attenuation of each of the frequencies attenuated by said first filter (4);
➢ said second amplifier (5) and suitable for adjusting the gain of said second amplifier (5),
said execution unit (13) being also connected to said first recognition unit (11) and being suitable for implementing said commands emitted by said first recognition unit (11);
said device (15,20,25,30,35,40,45,50,55) being **characterised in** further comprising:
• a third memory (16) connected to said first filter (4) and suitable for:
- storing said electrical signals as filtered by said first filter (4), continuously and in the same temporal order in which said electrical signals are emitted by said first filter (4)
and for
- retaining said electrical signals emitted by said first filter (4) memorized for a first period of time,
said third memory (16) being managed according to the "First In First Out" method so that, upon an emission of an electrical signal from said first filter (4) in a first instant of time, said third memory (16),
containing said electrical signals emitted by said first filter (4) during a time frame having a duration coinciding with that of said first period of time and ending in a second instant of time immediately preceding said first instant of time,
- stores said electrical signal emitted by said first filter (4) at said first instant of time
and
- emits said electrical signal stored in said third memory (16) at the instant of time in which said time frame began;
• a summer (17) connected:
- to said first filter (4), for receiving said electrical signals emitted by said first filter (4),
- to said third memory (16), for the reception of said electrical signals emitted by said third memory (16),
said summer (17) being suitable for carrying out, at any instant of time, a sum between said electrical signal received by said first filter (4) at said instant of time, and said electrical signal received by said third memory ( 16) **in that** instant of time,
said sum carried out by said summer (17) being weighted by means of:
- a first coefficient associated with said electrical signals received by said first filter (4)
and
- a second coefficient associated with said electrical signals received by said third memory (16),
each of said first and second coefficients having a value equal to zero whenever the other between said first and second coefficients has a value other than zero,
said second amplifier (5) being connected to:
- said summer (17), for receiving and amplifying the sums made by the latter
and to
- said first filter (4) exclusively through at least said summer,
so that said second amplifier (5) is suitable for receiving and amplifying:
- said electrical signals emitted by said first filter (4) and weighted by means of said first coefficient
and, but not at the same time,
- said electrical signals emitted by said third memory (16) and weighted by means of said second coefficient,
said execution unit (13) being connected to said summer (17) and being suitable for adjusting the value taken by each of said first and second coefficients, said control means (7) comprise also:
• a second feature extraction unit (56) connected to said first acoustic receiver (2),
said second extraction unit (56) being suitable for carrying out analyses in the time domain and in the frequency domain, on said electrical signals received by said first acoustic receiver (2) during a period of time, for the generation of a vector associated with said period of time and whose elements encode information concerning certain aspects of acoustic signals received by said first acoustic receiver (2) during said period of time with which said vector is associated,
so that electrical signals emitted with the passage of time by said first acoustic receiver (2) determine the generation of a succession of said vectors by said second extraction unit (56),
• another memory (57) connected to said second extraction unit (56) and suitable for storing rules on the basis of which said second extraction unit (56) is suitable for carrying out said analyzes in the time domain and in the frequency domain;
• a second ***recognition*** unit for recognizing acoustic signals and movements (58) connected both to said first extraction unit (9) and to said second extraction unit (56),
said second recognition unit (58) being suitable for:
- carry out analyses on the elements of said vectors emitted both by said first extraction unit (9) and by said second extraction unit (56) in order to establish:
➢ whether acoustic signals with one or more certain characteristics have been received or not by said first acoustic receiver (2)
and, in the event that acoustic signals with said one or more certain characteristics have been received by said first acoustic receiver (2),
➢ whether or not one or more certain movements of said device (15, 20, 25, 30, 35, 40, 45, 55) have taken place,
***analyses on the elements* of *said vectors emitted by said second extraction unit*** (56) ***being carried out purely to establish whether events generating said acoustic signals with said one or more certain characteristics have happened or not in the environment external to said device (15, 20, 25, 30,* 35, *40, 45, 55),***
***analyses on the elements* of *said vectors emitted by said first extraction unit (9) being carried out purely to establish whether or not said one or more certain movements* of *said device (15, 20, 25, 30,* 35, *40, 45, 55) have taken place,***
and for
- issuing certain commands to play the acoustic signals by controlling said first amplifier (3), said first filter (4), and said second amplifier (5) depending on whether, in the event that acoustic signals with said one or more certain characteristics have been received by said first acoustic receiver (2), said one or more among certain movements of said device (15, 20, 25, 30, 35, 40, 45, 55) have or have not taken place;
• a further memory (59) connected to said second recognition unit (58) and suitable for storing parameters on the basis of which said second recognition unit (58) is suitable for carrying out said analyzes of the elements of said vectors emitted by said first and second units extraction (9, 56),
said execution unit (13) being connected to said second recognition unit (58) for the implementation of said commands emitted by said second recognition unit (58).

2. Device (20) according to claim 1, **characterized in that** it comprises a second frequency filter (21) with a non-linear and / or time dependent response, said second filter (21) being connected to said first filter (4) and being suitable for further filtering said electrical signals as filtered by said first filter (4),
if said third memory (16) and said summer (17) are not present, said second amplifier (5) being connected to said second filter (21) for receiving said electrical signals as filtered by said second filter (21), and to said first filter exclusively by means of at least said second filter, so that said second amplifier (5) is suitable for amplifying said electrical signals as filtered by said first filter (4) exclusively as further filtered by at least said second filter (21),
if said third memory (16) and said summer (17) are present:
• said third memory (16) being connected to said second filter (21) for receiving said electrical signals as filtered by said second filter (21), and to said first filter (4) exclusively through at least said second filter ( 21),
so that said third memory (16) is suitable to memorize, to keep memorized for said first period of time and to emit said electrical signals as filtered by said first filter (4) exclusively as further filtered by at least said second filter (21)
and
• said summer (17) being connected to said second filter (21) for receiving said electrical signals as filtered by said second filter (21), and to said first filter (4) exclusively through at least said second filter (21) ),
so that said summer is suitable for carrying out said weighted sum with said electrical signals emitted by said first filter (4) exclusively as further filtered by at least said second filter (21).

3. Device (25) according to one of the preceding claims, **characterized in that** it comprises:
• a first electromagnetic receiver (26) suitable for:
- receiving radio frequency electromagnetic waves encoding acoustic signals
and for
- transducing said electromagnetic waves received by said first electromagnetic receiver (26) into electrical signals;
• a third variable gain amplifier (27) connected to said first electromagnetic receiver (26) and suitable for amplifying said electrical signals in which said first electromagnetic receiver (26) transduces said electromagnetic waves;
• a third frequency filter (28) connected to said third amplifier (27) and suitable for filtering said electrical signals as amplified by said third amplifier (27),
said summer (17) being connected to said third filter (28), for receiving said electrical signals as filtered by said third filter (28),
said summer (17) being also suitable for adding, at each instant of time and weightedly by means of a third coefficient, said electrical signal received by said third filter (28) at said instant of time, to said weighted sum, respectively by means of said first and second coefficients, between:
• said electrical signal received, at said instant of time, by said first filter (4), or by said second filter (21), if present
and
• said electrical signal received by said third memory (16) at said instant of time,
so that said second amplifier (5) is also suitable for receiving and amplifying said weighted sum, respectively by means of said first, second and third coefficients, between:
• said electrical signals received by said summer (17) by said first filter (4), or by said second filter (21), if present,
• said electrical signals received by said summer (17) by said third memory (16)
and
• said electrical signals received by said summer (17) by said third filter (28), said execution unit (13) being connected to:
• said third amplifier (27) and suitable for adjusting the gain of said third amplifier (27);
• said third filter (28) and suitable for regulating both the frequencies attenuated by said third filter (28), and the degree of attenuation of each of the frequencies attenuated by said third filter (28),
said execution unit (13) being suitable for adjusting the value taken by said third coefficient.

4. Device (30) according to claim 3, **characterized in that** it comprises:
• a fourth memory (31) connected to said third filter (28) and suitable for:
- storing said electrical signals as filtered by said third filter (28), continuously and in the same temporal order in which said electrical signals are emitted by said third filter (28)
and for
- retaining said electrical signals emitted by said third filter (28) memorized for a second period of time,
said fourth memory being managed according to the "First **In** First Out" method so that, upon an emission of an electrical signal from said third filter (28) in a third instant of time, said fourth memory (31),
containing said electrical signals emitted by said third filter (28) during a span of time having a duration coinciding with that of said second period of time and ending in a fourth instant of time immediately preceding said third instant of time,
- memorizes said electrical signal emitted by said third filter (28) in said third instant of time
and
- emits said electrical signal stored in said fourth memory (31) at the instant of time in which said span of time began,
said summer (17), in addition to being connected to said third filter (28) for receiving said electrical signals emitted by said third filter (28), being connected to said fourth memory (31) for receiving said electrical signals emitted from said fourth memory (31),
said summer (17) being suitable for carrying out, at any instant of time, a sum between said electrical signal received by said third filter (28) at said instant of time, and said electrical signal received by said fourth memory ( 31) **in that** instant of time,
said sum carried out by said summer between said electrical signals received by said third filter (28) and said electrical signals received by said fourth memory (31) being weighted by means of:
• said third coefficient, associated with said electrical signals received by said third filter (28)
and
• a fourth coefficient associated with said electrical signals received by said fourth memory (31),
each of said third and fourth coefficients having a value equal to zero whenever the other between said third and fourth coefficients has a value other than zero, so that said second amplifier (5), being connected to said third filter (28) exclusively by means of at least said summer (17), is suitable for receiving and amplifying:
• said electrical signals emitted by said third filter (28) and weighted by means of said third coefficient
and, but not at the same time,
• said electrical signals emitted by said fourth memory (31) and weighted by means of said fourth coefficient,
said summer (17) being furthermore suitable for carrying out, at any instant of time, a weighted sum, respectively by means of said first, second, third and fourth coefficients, between:
• said electrical signal received, at said instant of time, by said first filter (4), or by said second filter (21), if present,
• said electrical signal received by said third memory (16) at said instant of time,
• said electrical signal received by said third filter (28) at said instant of time and
• said electrical signal received by said fourth memory (31) at said instant of time,
so that said second amplifier (5) is also suitable for receiving and amplifying said weighted sum, respectively by means of said first, second, third and fourth coefficients, between:
• said electrical signals received by said summer (17) by said first filter (4), or by said second filter (21), if present,
• said electrical signals received by said summer (17) by said third memory (16),
• said electrical signals received by said summer (17) by said third filter (28) and
• said electrical signals received by said summer (17) by said fourth memory (31),
said execution unit (13) being suitable for adjusting the value taken by said fourth coefficient.

5. Device (35) according to claim 3 or 4, **characterized in that** it comprises a fourth frequency filter (36) with a non-linear and / or time dependent response,
said fourth filter (36) being connected to said third filter (28) and being suitable for further filtering said electrical signals as filtered by said third filter (28),
said summer (17) being connected to said fourth filter (36) for receiving said electrical signals as filtered by said fourth filter (36), and to said third filter (28) exclusively through at least said fourth filter (36),
so that said summer (17) is suitable for receiving and carrying out said weighted sum with said electrical signals emitted by said third filter (28) exclusively as further filtered by at least said fourth filter (36),
if said fourth memory (31) is present, said fourth memory (31) being connected to said fourth filter (36) for receiving said electrical signals as filtered by said fourth filter (36), and to said third filter (28) exclusively through at least said fourth filter (36),
so that said fourth memory (31) is suitable for memorizing, retaining memorized for said second period of time and for emitting said electrical signals as filtered by said third filter (28) exclusively as further filtered by at least said fourth filter (36).

6. Device (40) according to one of the preceding claims, **characterized in that** it comprises:
• a second acoustic receiver (41) suitable for:
- receiving acoustic signals from an environment external to said device (40),
and for
- transducing said acoustic signals received by said second acoustic receiver (41) into electrical signals,
said second acoustic receiver (41) being arranged in such a way that, when said device (40) is applied to a person in correspondence with an ear of the same, said external environment from which said second acoustic receiver (41) is suitable for receiving said acoustic signals is internal to the external auditory canal of said ear;
• a fourth variable gain amplifier (42) connected to said second acoustic receiver (41) and suitable for amplifying said electrical signals in which said second acoustic receiver (41) transduces said acoustic signals;
• a fifth frequency filter (43) connected to said fourth amplifier (42) and suitable for filtering said electrical signals as amplified by said fourth amplifier (42);
said summer (17) being connected to said fifth filter (43), for the reception of said electrical signals as filtered by said fifth filter (43),
said summer (17) being furthermore suitable for subtracting, at each instant of time and weightedly by means of a fifth coefficient, said electrical signal received by said fifth filter (43) at said instant of time, from said sum between:
• said electrical signal received, at said instant of time, by said first filter (4), or by said second filter (21), if present, and said electrical signal received by said third memory (16) in said instant of time, respectively weighted by means of said first and second coefficients
and, if said first electromagnetic receiver (26) is present,
• said electrical signal received, at said instant of time, by said third filter (28), or by said fourth filter (36), if present, weighted by means of said third coefficient
and, if said fourth memory (31) is present,
• said electrical signal received by said fourth memory (31) at said instant of time, weighted by means of said fourth coefficient,
so that said second amplifier (5) is also suitable for receiving and amplifying said sum between:
• said electrical signals received by said summer (17) by said first filter (4), or by said second filter (21), if present, and said electrical signals received by said summer (17) by said third memory (16), respectively weighted by means of said first and second coefficients
and, if said first electromagnetic receiver (26) is present,
• said electrical signals received by said summer (17) by said third filter (28), or by said fourth filter (36), if present, weighted by means of said third coefficient
and, if said fourth memory (31) is present,
• said electrical signals received by said summer (17) by said fourth memory (31) weighted by means of said fourth coefficient,
from which said electrical signals received from said summer (17) by said fifth filter (43) have been subtracted and weighted by means of said fifth coefficient, said execution unit (13) being also connected to:
• said fourth amplifier (42) and suitable for adjusting the gain of said fourth amplifier (42);
• said fifth filter (43) and suitable for regulating both the frequencies attenuated by said fifth filter (43), and the degree of attenuation of each of the frequencies attenuated by said fifth filter (43),
said execution unit (13) being moreover suitable for adjusting the value taken by said fifth coefficient.

7. Device (45) according to claim 6, **characterized in that** it comprises a sixth frequency filter (46) with a non-linear and / or time dependent response, said sixth filter (46) being connected to said fifth filter (43) and being suitable for further filtering said electrical signals as filtered by said fifth filter (43),
said summer (17) being connected to said sixth filter (46) for receiving said electrical signals as filtered by said sixth filter (46), and to said fifth filter (43) exclusively through at least said sixth filter (46),
so that said summer (17) is suitable for receiving and carrying out said weighted sum with said electrical signals emitted by said fifth filter (43) exclusively as further filtered by at least said sixth filter (46).

8. Device (50) according to one of the preceding claims, **characterized in that** it comprises:
• an electromagnetic transmitter (51) connected to said first filter (4), or to said second filter (21), if present, and suitable for:
- transducing said electrical signals as filtered by said first filter (4) into radiofrequency electromagnetic waves, or said electrical signals as filtered by said second filter (21), if present
and for
- emitting in an environment external to said device (50) said electromagnetic waves in which said electromagnetic transmitter (51) has transduced said electrical signals as filtered by said first filter (4), or said electrical signals as filtered by said second filter ( 21), if present;
• a second electromagnetic receiver (52) suitable for
- receiving radio frequency electromagnetic waves,
and for
- transducing said electromagnetic waves received by said second electromagnetic receiver (52) into electrical signals,
said summer (17) being connected to said second electromagnetic receiver (52) for receiving said electrical signals in which said second electromagnetic receiver (52) transduces said electromagnetic waves,
said summer (17) being furthermore suitable for carrying out, in each instant of time, a weighted sum, by means of a sixth coefficient, between said electrical signal possibly received by said second electromagnetic receiver (52) at said instant of time and :
• said electrical signal received, at said instant of time, by said first filter (4) or by said second filter (21), if present, and said electrical signal received by said third memory (16) in said instant of time, respectively weighted by means of said first and second coefficients
and, if said first electromagnetic receiver (26) is present,
• said electrical signal received, at said instant of time, by said third filter (28), or by said fourth filter (36), if present, weighted by means of said third coefficient
and, if said fourth memory (31) is present,
• said electrical signal received, at said instant of time, by said fourth memory (31), weighted by means of said fourth coefficient,
from which, if said second acoustic receiver (41) is present,
• said electrical signal received, at said instant of time, by said fifth filter (43), or by said sixth filter (46), if present, weighted by means of said fifth coefficient, is subtracted,
so that said second amplifier (5) is also suitable for receiving and amplifying said sum between:
• said electrical signals received from said summer (17) by said second electromagnetic receiver (52) and weighted by means of said sixth coefficient,
• said electrical signals received by said summer (17) by said first filter (4), or by said second filter (21), if present, and said electrical signals received by said summer (17) from said third memory (16), respectively weighted by means of said first and second coefficients
and, if said first electromagnetic receiver (26) is present,
• said electrical signals received by said summer (17) by said third filter (28), or by said fourth filter (46), if present, weighted by means of said third coefficient
and, if said fourth memory (31) is present,
• said electrical signals received by said summer (17) by said fourth memory (31) weighted by means of said fourth coefficient,
from which, if said second acoustic receiver (41) is present,
• said electrical signals received by said summer (17) by said fifth filter (43), or by said sixth filter (46), if present, weighted by means of said fifth coefficient,
and subtracted, said execution unit (13) being moreover suitable for adjusting the value taken by said sixth coefficient.

## Patentansprüche

1. Vorrichtung (15, 20, 25, 30, 35, 40, 45, 50, 55), die an einer Person in Übereinstimmung mit einem Ohr dieser Person angebracht werden kann, wobei die Vorrichtung (15, 20, 25, 30, 35, 40, 45, 50, 55) umfasst:
• einen ersten akustischen Empfänger (2), der in der Lage ist:
- akustische Signale aus einer Umgebung außerhalb der Vorrichtung (15, 20, 25, 30, 35, 40, 45, 50, 55) zu empfangen und
- die der von dem ersten Akustikempfänger (2) empfangenen Akustiksignale in elektrische Signale umzuwandeln, wobei der erste Akustikempfänger (2) so angeordnet ist, dass, wenn die Vorrichtung (15, 20, 25, 30, 35, 40, 45, 50, 55) an einem Ohr einer Person angebracht wird, liegt die äußere Umgebung, aus der der erste Akustikempfänger (2) Akustiksignale empfangen kann, ebenfalls außerhalb des äußeren Gehörgangs des Ohrs;
• einen ersten Verstärker mit variabler Verstärkung (3), der mit dem ersten akustischen Empfänger (2) verbunden ist und die elektrischen Signale verstärken kann, wobei der erste akustische Empfänger (2) die akustischen Signale umwandelt;
• ein erstes Frequenzfilter (4), das mit dem ersten Verstärker (3) verbunden ist und die durch den ersten Verstärker (3) verstärkten elektrischen Signale filtern kann;
• einen zweiten Verstärker mit variabler Verstärkung (5), der mit dem ersten Filter (4) verbunden ist und die durch den ersten Filter (4) gefilterten elektrischen Signale verstärken kann;
• mindestens einen Audioplayer (6), der an den zweiten Verstärker (5) angeschlossen ist und in der Lage ist:
- die durch den zweiten Verstärker (5) verstärkten elektrischen Signale in akustische Signale umzuwandeln
und für
- die der akustischen Signale in eine Umgebung außerhalb der Vorrichtung (15, 20, 25, 30, 35, 40, 45, 50, 55) auszusenden, in die der Audioplayer (6) die durch den zweiten Verstärker (5) verstärkten elektrischen Signale umwandelt, wobei der Audioplayer (6) so angeordnet ist, dass, wenn die Vorrichtung (15, 20, 25, 30, 35, 40, 45, 50, 55) an einer Person entsprechend einem Ohr derselben angelegt wird, liegt die externe Umgebung, in der der Audioplayer (6) akustische Signale aussenden kann, innerhalb des äußeren Gehörgangs des Ohrs ;
• Steuermittel (7) verbunden mit:
- dem ersten Verstärker (3) und in der Lage, eine Verstärkung des ersten Verstärkers (3) einzustellen;
- wobei das erste Filter (4) in der Lage ist, sowohl die durch das erste Filter (4) gedämpften Frequenzen als auch einen Dämpfungsgrad jeder der durch das erste Filter (4) gedämpften Frequenzen einzustellen;
- der zweite Verstärker (5) ist in der Lage, eine Verstärkung des zweiten Verstärkers (5) einzustellen,
wobei die Steuermittel (7) Folgendes umfassen:
- eine Bewegungserkennungseinheit (8), die in der Lage ist:
> eine Bewegung der Vorrichtung (15, 20, 25, 30, 35, 40, 45, 50, 55) zu erfassen und
> kontinuierlich in Abhängigkeit von der Zeit elektrische Signale aussenden, die Informationen über mögliche Bewegungen der Vorrichtung (15, 20, 25, 30, 35, 40, 45, 50, 55) kodieren;
- eine erste Merkmalsextraktionseinheit (9), die mit der Erfassungseinheit (8) verbunden ist, wobei die erste Extraktionseinheit (9) in der Lage ist, Analysen im Zeitbereich und im Frequenzbereich an den von der Erfassungseinheit (8) während eines Zeitintervalls empfangenen elektrischen Signalen durchzuführen, um einen mit dem Zeitbereich verknüpften Vektor zu erzeugen, dessen Elemente Informationen bezüglich bestimmter Aspekte einer oder mehrerer möglicher Bewegungen der Vorrichtung (15, 20, 25, 30, 35, 40, 45, 50, 55) während des Zeitintervalls kodieren, mit dem der Vektor verknüpft ist,
so dass kontinuierlich und als Funktion der Zeit von der Erfassungseinheit (8) ausgesendete elektrische Signale im Laufe der Zeit eine Erzeugung einer Abfolge der Vektoren durch die erste Extraktionseinheit (9) bestimmen;
- einen ersten Speicher (10), der mit der ersten Extraktionseinheit (9) verbunden ist und Regeln speichern kann, auf deren Grundlage die erste Extraktionseinheit (9) die Analysen im Zeitbereich und im Frequenzbereich durchführen kann;
- eine erste Bewegungserkennungseinheit (11), die mit der ersten Extraktionseinheit (9) verbunden ist, wobei die erste Erkennungseinheit (11) in der Lage ist:
> Analysen der Elemente der von der ersten Extraktionseinheit (9) ausgegebenen Vektoren durchzuführen, um festzustellen, ob eine oder mehrere bestimmte Bewegungen der Vorrichtung stattgefunden haben oder nicht (15, 20, 25, 30, 35, 40, 45, 50, 55),
und
> bestimmte Befehle zum Einstellen der Verstärkung des ersten Verstärkers (3) auszusenden, zum Einstellen der durch den ersten Filter (4) gedämpften Frequenzen, zum Einstellen des Dämpfungsgrads jeder der durch den ersten Filter (4) gedämpften Frequenzen und zum Einstellen der Verstärkung des zweiten Verstärkers (5), abhängig davon, ob bestimmte Bewegungen der Vorrichtung stattgefunden haben oder nicht (15, 20, 25, 30, 35, 40, 45, 50, 55);
- einen zweiten Speicher (12), der mit der ersten Erkennungseinheit (11) verbunden ist und Parameter speichern kann, auf deren Grundlage die erste Erkennungseinheit (11) die Analysen der Elemente der von der ersten Extraktionseinheit (9) ausgegebenen Vektoren durchführen kann;
- eine Ausführungseinheit (13), verbunden mit:
> dem ersten Verstärker (3) und in der Lage, die Verstärkung des ersten Verstärkers (3) einzustellen;
> dem ersten Filter (4) und in der Lage, sowohl die durch das erste Filter (4) gedämpften Frequenzen als auch den Dämpfungsgrad jeder der durch das erste Filter (4) gedämpften Frequenzen einzustellen;
> dem zweiten Verstärker (5) und in der Lage, die Verstärkung des zweiten Verstärkers (5) einzustellen,
wobei die Ausführungseinheit (13) außerdem mit der ersten Erkennungseinheit (11) verbunden ist und in der Lage ist, die von der ersten Erkennungseinheit (11) ausgegebenen Befehle umzusetzen; wobei die Vorrichtung (15, 20, 25, 30, 35, 40, 45, 50, 55) **dadurch gekennzeichnet ist, dass** sie weiterhin umfasst:
• einen dritten Speicher (16), der mit dem ersten Filter (4) verbunden ist und in der Lage ist:
- die durch den ersten Filter (4) gefilterten elektrischen Signale, kontinuierlich und in der gleichen zeitlichen Reihenfolge zu speichern, in der die elektrischen Signale durch den ersten Filter (4) ausgegeben werden;
und für
- die von dem ersten Filter (4) ausgesandten elektrischen Signale für einen ersten Zeitraum zu speichern,
wobei der dritte Speicher (16) nach der Methode "First In First Out" verwaltet wird, so dass bei Aussendung eines elektrischen Signals von dem ersten Filter (4) zu einem ersten Zeitpunkt der dritte Speicher (16),
der die von dem ersten Filter (4) ausgesandten elektrischen Signale für einen Zeitraum enthält, dessen Dauer mit der des ersten Zeitraums übereinstimmt und der zu einem zweiten Zeitpunkt endet, der dem ersten Zeitpunkt unmittelbar vorangeht,
- das vom ersten Filter (4) zum ersten Zeitpunkt abgegebene elektrische Signal speichert
und
- das im dritten Speicher (16) gespeicherte elektrische Signal zu dem Zeitpunkt ausgibt, als der Zeitraum begann;
• einem Addierer (17), der verbunden ist mit:
- dem ersten Filter (4) zum Empfangen der von dem ersten Filter (4) ausgesandten elektrischen Signale,
- dem dritten Speicher (16) zum Empfangen der von dem dritten Speicher (16) ausgesandten elektrischen Signale,
wobei der Addierer (17) zu jedem Zeitpunkt eine Summe zwischen dem von dem ersten Filter (4) zu diesem Zeitpunkt empfangenen elektrischen Signal und dem von dem dritten Speicher (16) zu diesem Zeitpunkt empfangenen elektrischen Signal bilden kann,
wobei die von dem Addierer (17) gebildete Summe gewichtet wird mittels:
- einen ersten Koeffizienten, der den von dem ersten Filter (4) empfangenen elektrischen Signalen zugeordnet ist, und
- einen zweiten Koeffizienten, der den von dem dritten Speicher (16) empfangenen elektrischen Signalen zugeordnet ist, wobei jeder der ersten und zweiten Koeffizienten einen Wert gleich Null hat, wenn der andere der ersten und zweiten Koeffizienten einen Wert ungleich Null hat,
wobei der zweite Verstärker (5) verbunden ist mit:
- dem Addierer (17), um die von ihm gebildeten Summen zu empfangen und zu verstärken,
und
- das erste Filter (4) ausschließlich mittels zumindest des Addierers,
so dass der zweite Verstärker (5) in der Lage ist, folgendes zu empfangen und zu verstärken:
- die von dem ersten Filter (4) abgegebenen und mit dem ersten Koeffizienten gewichteten elektrischen Signale,
und, jedoch nicht gleichzeitig,
- die elektrischen Signale, die von dem dritten Speicher (16) ausgegeben und mittels des zweiten Koeffizienten gewichtet werden,
wobei die Ausführungseinheit (13) mit dem Addierer (17) verbunden ist und in der Lage ist, den Wert einzustellen, den jeder der ersten und zweiten Koeffizienten annimmt, wobei die Steuermittel (7) außerdem umfassen:
• eine zweite Merkmalsextraktionseinheit (56), die mit dem ersten Akustikempfänger (2) verbunden ist,
wobei die zweite Extraktionseinheit (56) in der Lage ist, Analysen im Zeitbereich und im Frequenzbereich an den von dem ersten Akustikempfänger (2) während eines Zeitraums empfangenen elektrischen Signalen durchzuführen, um einen mit diesem Zeitraum verknüpften Vektor zu erzeugen, dessen Elemente Informationen bezüglich bestimmter Aspekte der von dem ersten Akustikempfänger (2) während des Zeitraums empfangenen Akustiksignale kodieren, mit denen der Vektor verknüpft ist,
so dass die im Laufe der Zeit von dem ersten Akustikempfänger (2) ausgesandten elektrischen Signale die Erzeugung einer Abfolge der Vektoren durch die zweite Extraktionseinheit (56) bestimmen;
• einen weiteren Speicher (57), der mit der zweiten Extraktionseinheit (56) verbunden ist und Regeln speichern kann, auf deren Grundlage die zweite Extraktionseinheit (56) die Analysen im Zeitbereich und im Frequenzbereich durchführen kann;
• eine zweite akustische Signal- und Bewegungserkennungseinheit (58), die sowohl mit der ersten Extraktionseinheit (9) als auch mit der zweiten Extraktionseinheit (56) verbunden ist,
wobei die zweite Erkennungseinheit (58) in der Lage ist:
- Analysen der Elemente der Vektoren, die sowohl von der ersten Extraktionseinheit (9) als auch von der zweiten Extraktionseinheit (56) ausgegeben werden, durchzuführen um festzustellen
> ob akustische Signale mit einer oder mehreren bestimmten Eigenschaften von dem ersten akustischen Empfänger (2) empfangen wurden oder nicht,
und, falls akustische Signale mit einer oder mehreren bestimmten Eigenschaften von dem ersten akustischen Empfänger (2) empfangen wurden,
> ob eine oder mehrere ermittelte Bewegungen der Vorrichtung (15, 20, 25, 30, 35, 40, 45, 55) stattgefunden haben oder nicht, wobei Analysen der Elemente der von der zweiten Extraktionseinheit (56) ausgesandten Vektoren ausschließlich durchgeführt wurden, um festzustellen, ob die Ereignisse, die solche akustischen Signale mit den einen oder mehreren Eigenschaften erzeugt haben, in der äußeren Umgebung der Vorrichtung (15, 20, 25, 30, 35, 40, 45, 55) stattgefunden haben oder nicht, wobei Analysen der Elemente der von der ersten Extraktionseinheit (9) ausgesandten Vektoren ausschließlich durchgeführt wurden, um festzustellen, ob eine oder mehrere der ermittelten Bewegungen der Vorrichtung (15, 20, 25, 30, 35, 40, 45, 55) stattgefunden haben oder nicht,
und um
- Ausgeben bestimmter Befehle zum Abspielen der akustischen Signale durch Steuern des ersten Verstärkers (3), des ersten Filters (4) und des zweiten Verstärkers (5), abhängig davon, ob im Falle des Empfangs akustischer Signale mit einer oder mehreren der bestimmten Eigenschaften durch den ersten Akustikempfänger (2) eine oder mehrere Bewegungen unter bestimmten Bewegungen der Vorrichtung (15, 20, 25, 30, 35, 40, 45, 55) stattgefunden haben oder nicht;
• einen zusätzlichen Speicher (59), der mit der zweiten Erkennungseinheit (58) verbunden ist und Parameter speichern kann, auf deren Grundlage die zweite Erkennungseinheit (58) die Analysen der Elemente der von der ersten und zweiten Extraktionseinheit (9, 56) ausgegebenen Vektoren durchführen kann,
wobei die Ausführungseinheit (13) mit der zweiten Erkennungseinheit (58) zur Ausführung der von der zweiten Erkennungseinheit (58) ausgegebenen Befehle verbunden ist.

2. Vorrichtung (20) nach Anspruch 1, **dadurch gekennzeichnet, dass** sie ein zweites Frequenzfilter (21) mit nichtlinearer und/oder zeitabhängiger Antwort umfasst, wobei das zweite Filter (21) mit dem ersten Filter (4) verbunden ist und die elektrischen Signale, wie sie durch das erste Filter (4) gefiltert wurden, weiter filtern kann, wenn der dritte Speicher (16) und der Addierer (17) nicht vorhanden sind, wobei der zweite Verstärker (5) mit dem zweiten Filter (21) verbunden ist, um die elektrischen Signale, wie sie durch das zweite Filter (21) gefiltert wurden, zu empfangen, und mit dem ersten Filter ausschließlich mittels zumindest des zweiten Filters verbunden ist, so dass der zweite Verstärker (5) die elektrischen Signale, wie sie durch das erste Filter (4) gefiltert wurden, ausschließlich verstärken kann, wie sie durch zumindest das zweite Filter (21) weiter gefiltert wurden, wenn der dritte Speicher (16) und der Addierer (17) vorhanden sind:
• wobei der dritte Speicher (16) mit dem zweiten Filter (21) verbunden ist, um die durch den zweiten Filter (21) gefilterten elektrischen Signale zu empfangen, und mit dem ersten Filter (4) ausschließlich über mindestens den zweiten Filter (21) verbunden ist,
so dass der dritte Speicher (16) in der Lage ist, die durch den ersten Filter (4) gefilterten elektrischen Signale zu speichern, für die erste Zeitspanne sie gespeichert zu halten und sie ausschließlich auszugeben, wenn sie zusätzlich durch mindestens den zweiten Filter (21) gefiltert wurden,
und
• wobei der Addierer (17) mit dem zweiten Filter (21) verbunden ist, um die durch den zweiten Filter (21) gefilterten elektrischen Signale zu empfangen, und mit dem ersten Filter (4) ausschließlich über zumindest den zweiten Filter (21) verbunden ist,
so dass der Addierer in der Lage ist, die gewichtete Summe mit den durch den ersten Filter (4) ausgegebenen elektrischen Signalen ausschließlich in der durch zumindest den zweiten Filter (21) weiter gefilterten Form zu bilden.

3. Vorrichtung (25) nach einem der vorangehenden Ansprüche, **dadurch gekennzeichnet, dass** sie umfasst:
• einen ersten elektromagnetischen Empfänger (26), geeignet für:
- Empfangen von elektromagnetischen Radiowellen, die akustische Signale kodieren und zu
- Umwandeln der von dem ersten elektromagnetischen Empfänger (26) empfangenen elektromagnetischen Wellen in elektrische Signale;
• einen dritten Verstärker mit variabler Verstärkung (27), der mit dem ersten elektromagnetischen Empfänger (26) verbunden ist und zum Verstärken der elektrischen Signale geeignet ist, in die der erste elektromagnetische Empfänger (26) die elektromagnetischen Wellen umwandelt;
• einen dritten Frequenzfilter (28), der mit dem dritten Verstärker (27) verbunden ist und zum Filtern der durch den dritten Verstärker (27) verstärkten elektrischen Signale geeignet ist, wobei der Addierer (17) mit dem dritten Filter (28) verbunden ist, um die durch den dritten Filter (28) gefilterten elektrischen Signale zu empfangen, wobei der Addierer (17) außerdem dazu geeignet ist, zu jedem Zeitpunkt und gewichtet mittels eines dritten Koeffizienten, das von dem dritten Filter (28) zu diesem Zeitpunkt empfangene elektrische Signal zu der mittels des ersten und zweiten Koeffizienten gewichteten Summe zwischen:
• das elektrische Signal, das zu dem Zeitpunkt von dem ersten Filter (4) oder von dem zweiten Filter (21), falls vorhanden, empfangen wird, und
• das elektrische Signal, das von dem dritten Speicher (16) zu dem genannten Zeitpunkt empfangen wird, so dass der zweite Verstärker (5) außerdem dazu geeignet ist, die gewichtete Summe zu empfangen und verstärken jeweils mittels des ersten, zweiten und dritten Koeffizienten zwischen:
• den elektrischen Signalen, die der Addierer (17) durch das erste Filter (4) oder durch das zweite Filter (21), falls vorhanden, empfängt,
• die von dem Addierer (17) empfangenen elektrischen Signale werden von dem dritten Speicher (16) empfangen und
• die vom Addierer (17) empfangenen elektrischen Signale werden vom dritten Filter (28) empfangen, wobei die Ausführungseinheit (13) verbunden ist mit:
• dem dritten Verstärker (27) und geeignet zum Regeln der Verstärkung des dritten Verstärkers (27);
• der dritte Filter (28) ist geeignet zum Regeln sowohl der durch den dritten Filter (28) gedämpften Frequenzen als auch des Dämpfungsgrads jeder der durch den dritten Filter (28) gedämpften Frequenzen, wobei die Ausführungseinheit (13) dazu geeignet ist, den von dem dritten Koeffizienten angenommenen Wert zu regeln.

4. Vorrichtung (30) nach Anspruch 3, **dadurch gekennzeichnet, dass** sie umfasst:
• einen vierten Speicher (31), der mit dem dritten Filter (28) verbunden ist und dazu geeignet ist:
- Speichern der durch den dritten Filter (28) gefilterten elektrischen Signale, und zwar kontinuierlich und in der gleichen zeitlichen Reihenfolge, in der die elektrischen Signale durch den dritten Filter (28) ausgegeben werden;
und zu
- die von dem dritten Filter (28) abgegebenen elektrischen Signale für eine zweite Zeitspanne gespeichert zu halten,
wobei der vierte Speicher nach der Methode "First In First Out" verwaltet wird, so dass bei der Emission eines elektrischen Signals von dem dritten Filter (28) zu einem dritten Zeitpunkt der vierte Speicher (31)
enthaltend die elektrischen Signale, die von dem dritten Filter (28) während eines Zeitintervalls ausgesendet werden, dessen Dauer mit der des zweiten Zeitintervalls übereinstimmt und das zu einem vierten Zeitpunkt endet, der dem dritten Zeitpunkt unmittelbar vorangeht,
- Speichern des vom dritten Filter (28) zum dritten Zeitpunkt abgegebenen elektrischen Signals
und
- das in dem vierten Speicher (31) gespeicherte elektrische Signal zu dem Zeitpunkt aussendet, an dem das Zeitintervall begann,
wobei der Addierer (17) nicht nur mit dem dritten Filter (28) zum Empfang der von dem dritten Filter (28) ausgesendeten elektrischen Signale verbunden ist, sondern auch mit dem vierten Speicher (31) zum Empfang der von dem vierten Speicher (31) ausgesendeten elektrischen Signale verbunden ist,
wobei der Addierer (17) dazu geeignet ist, zu jedem Zeitpunkt eine Summe zwischen dem zu diesem Zeitpunkt von dem dritten Filter (28) empfangenen elektrischen Signal und dem zu diesem Zeitpunkt von dem vierten Speicher (31) empfangenen elektrischen Signal zu bilden,
wobei die von dem Addierer durchgeführte Summe der von dem dritten Filter (28) empfangenen elektrischen Signale und der von dem vierten Speicher (31) empfangenen elektrischen Signale gewichtet wird mittels:
• des dritten Koeffizienten, der den von dem dritten Filter (28) empfangenen elektrischen Signalen zugeordnet ist,
und
• eines vierten Koeffizienten, der den von dem vierten Speicher (31) empfangenen elektrischen Signalen zugeordnet ist,
wobei jeder der dritten und vierten Koeffizienten einen Wert gleich Null hat, wenn der andere der dritten und vierten Koeffizienten einen anderen Wert als Null hat, so dass der zweite Verstärker (5), der ausschließlich über zumindest den Addierer (17) mit dem dritten Filter (28) verbunden ist, zum Empfangen und Verstärken geeignet ist:
• die von dem dritten Filter (28) abgegebenen und mit dem dritten Koeffizienten gewichteten elektrischen Signale
und, aber nicht gleichzeitig,
• die von dem vierten Speicher (31) ausgegebenen und mit dem vierten Koeffizienten gewichteten elektrischen Signale,
wobei der Addierer (17) auch dazu geeignet ist, zu jedem beliebigen Zeitpunkt mittels des ersten, zweiten, dritten und vierten Koeffizienten jeweils eine gewichtete Summe zu bilden zwischen:
• das elektrische Signal, das zu dem Zeitpunkt von dem ersten Filter (4) oder von dem zweiten Filter (21), falls vorhanden, empfangen wird,
• das elektrische Signal, das von dem dritten Speicher (16) zu dem genannten Zeitpunkt empfangen wird,
• das elektrische Signal, das von dem dritten Filter (28) zu dem Zeitpunkt empfangen wird
und
• das elektrische Signal, das von dem vierten Speicher (31) zu dem Zeitpunkt empfangen wird,
so dass der zweite Verstärker (5) außerdem dazu geeignet ist, die gewichtete Summe zu empfangen und zu verstärken, und zwar jeweils mittels des ersten, zweiten, dritten und vierten Koeffizienten zwischen:
• die elektrischen Signale, die der Addierer (17) durch das erste Filter (4) oder durch das zweite Filter (21), falls vorhanden, empfängt,
• die von dem Addierer (17) empfangenen elektrischen Signale werden von dem dritten Speicher (16) empfangen,
• die von dem Addierer (17) empfangenen elektrischen Signale werden von dem dritten Filter (28) empfangen und
• die vom Addierer (17) empfangenen elektrischen Signale werden vom vierten Speicher (31) empfangen,
wobei die Ausführungseinheit (13) dazu geeignet ist, den von dem vierten Koeffizienten angenommenen Wert zu regeln.

5. Vorrichtung (35) nach Anspruch 3 oder **4, dadurch gekennzeichnet, dass** sie einen vierten Frequenzfilter (36) mit nichtlinearer und/oder zeitabhängiger Antwort umfasst,
wobei der vierte Filter (36) mit dem dritten Filter (28) verbunden ist und dazu geeignet ist, die durch den dritten Filter (28) gefilterten elektrischen Signale weiter zu filtern,
wobei der Addierer (17) mit dem vierten Filter (36) verbunden ist, um die durch den vierten Filter (36) gefilterten elektrischen Signale zu empfangen, und mit dem dritten Filter (28) ausschließlich über mindestens den vierten Filter (36),
so dass der Addierer (17) in der Lage ist, die gewichtete Summe mit den durch den dritten Filter (28) ausgegebenen elektrischen Signalen ausschließlich als weiter durch mindestens den vierten Filter (36) gefiltert zu empfangen und durchzuführen,
wenn der vierte Speicher (31) vorhanden ist, wobei der vierte Speicher (31) mit dem vierten Filter (36) verbunden ist, um die durch den vierten Filter (36) gefilterten elektrischen Signale zu empfangen, und der dritte Filter (28) ausschließlich durch zumindest den vierten Filter (36),
so dass der vierte Speicher (31) dazu ausgelegt ist, die durch den dritten Filter (28) gefilterten elektrischen Signale zu speichern, während der zweiten Zeitspanne gespeichert zu halten und sie ausschließlich in der durch zumindest den vierten Filter (36) weiter gefilterten Form auszugeben.

6. Vorrichtung (40) nach einem der vorangehenden Ansprüche, **dadurch gekennzeichnet, dass** sie umfasst:
• einen zweiten akustischen Empfänger (41), geeignet für:
- akustische Signale aus einer Umgebung außerhalb der Vorrichtung (40) zu empfangen, und zu
- die vom zweiten akustischen Empfänger (41) empfangenen akustische Signale in elektrische Signale umzuwandeln, wobei der zweite akustische Empfänger (41) so angeordnet ist, dass, wenn die Vorrichtung (40) an einem Ohr einer Person angelegt wird, liegt die äußere Umgebung, aus der der zweite akustische Empfänger (41) die akustischen Signale empfangen kann, innerhalb des äußeren Gehörgangs des Ohrs liegt;
• einen vierten Verstärker mit variabler Verstärkung (42), der mit dem zweiten akustischen Empfänger (41) verbunden ist und zum Verstärken der elektrischen Signale geeignet ist, in die der zweite akustische Empfänger (41) die akustischen Signale umwandelt;
• ein fünftes Frequenzfilter (43), das mit dem vierten Verstärker (42) verbunden ist und zum Filtern der durch den vierten Verstärker (42) verstärkten elektrischen Signale geeignet ist; wobei der Addierer (17) mit dem fünften Filter (43) verbunden ist, um die durch den fünften Filter (43) gefilterten elektrischen Signale zu empfangen, wobei der Addierer (17) außerdem dazu geeignet ist, zu jedem Zeitpunkt und gewichtet mittels eines fünften Koeffizienten das von dem fünften Filter (43) zu diesem Zeitpunkt empfangene elektrische Signal von der Summe zu subtrahieren, aus:
• das zu dem Zeitpunkt von dem ersten Filter (4) oder von dem zweiten Filter (21), falls vorhanden, empfangene elektrische Signal und das zu dem Zeitpunkt von dem dritten Speicher (16) empfangene elektrische Signal, jeweils gewichtet mittels des ersten und zweiten Koeffizienten und, wenn der erste elektromagnetische Empfänger (26) vorhanden ist,
• das elektrische Signal, das zu dem Zeitpunkt von dem dritten Filter (28) oder von dem vierten Filter (36), falls vorhanden, empfangen wird, gewichtet mit dem dritten Koeffizienten und, wenn der vierte Speicher (31) vorhanden ist,
• das vom vierten Speicher (31) zum genannten Zeitpunkt empfangene elektrische Signal, gewichtet mittels des genannten vierten Koeffizienten, so dass der zweite Verstärker (5) auch zum Empfangen und Verstärken der Summe zwischen: geeignet ist
• die vom Addierer (17) vom ersten Filter (4) oder vom zweiten Filter (21), falls vorhanden, empfangenen elektrischen Signale und die vom Addierer (17) vom dritten Speicher (16) empfangenen elektrischen Signale, jeweils gewichtet mittels der ersten und zweiten Koeffizienten und, wenn der erste elektromagnetische Empfänger (26) vorhanden ist,
• die vom Addierer (17) empfangenen elektrischen Signale werden vom dritten Filter (28) oder vom vierten Filter (36), falls vorhanden, mit Hilfe des dritten Koeffizienten gewichtet und, wenn der vierte Speicher (31) vorhanden ist,
• die von dem Addierer (17) empfangenen elektrischen Signale werden von dem vierten Speicher (31) mit Hilfe des vierten Koeffizienten gewichtet, von dem die vom Addierer (17) empfangenen elektrischen Signale vom fünften Filter (43) subtrahiert und mittels des fünften Koeffizienten gewichtet wurden, wobei die Ausführungseinheit (13) weiterhin verbunden ist mit: • dem vierten Verstärker (42) und geeignet zum Regeln der Verstärkung des vierten Verstärkers (42);
• das fünfte Filter (43) und geeignet zum Regeln sowohl der durch das fünfte Filter (43) gedämpften Frequenzen als auch des Dämpfungsgrads jeder der durch das fünfte Filter (43) gedämpften Frequenzen, wobei die Ausführungseinheit (13) auch dazu geeignet ist, den vom fünften Koeffizienten angenommenen Wert zu regeln.

7. Vorrichtung (45) nach Anspruch 6, **dadurch gekennzeichnet, dass** sie einen sechsten Frequenzfilter (46) mit einer nichtlinearen und/oder zeitabhängigen Antwort umfasst, wobei der sechste Filter (46) mit dem fünften Filter (43) verbunden ist und zur weiteren Filterung der durch den fünften Filter (43) gefilterten elektrischen Signale geeignet ist, wobei der Addierer (17) mit dem sechsten Filter (46) zum Empfangen der durch den sechsten Filter (46) gefilterten elektrischen Signale und mit dem fünften Filter (43) ausschließlich über zumindest den sechsten Filter (46) verbunden ist, so dass der Addierer (17) zum Empfangen und Durchführen der gewichteten Summe mit den durch den fünften Filter (43) ausgegebenen elektrischen Signalen geeignet ist, die ausschließlich zusätzlich durch zumindest den sechsten Filter (46) gefiltert wurden.

8. Vorrichtung (50) nach einem der vorhergehenden Ansprüche, **dadurch gekennzeichnet, dass** sie umfasst:
• einen elektromagnetischen Sender (51), der mit dem ersten Filter (4) oder, falls vorhanden, mit dem zweiten Filter (21) verbunden ist und für folgendes geeignet ist:
- Umwandeln der durch den ersten Filter (4) gefilterten elektrischen Signale oder der durch den zweiten Filter (21), falls vorhanden, gefilterten elektrischen Signale in hochfrequente elektromagnetische Wellen und
- Aussenden der elektromagnetischen Wellen in eine Umgebung außerhalb der Vorrichtung (50), in die der elektromagnetische Sender (51) die durch den ersten Filter (4) gefilterten elektrischen Signale oder die durch den zweiten Filter (21), falls vorhanden, gefilterten elektrischen Signale übertragen hat;
• einen zweiten elektromagnetischen Empfänger (52) für
- elektromagnetische Radiowellen empfangen und
- Umwandeln der von dem zweiten elektromagnetischen Empfänger (52) empfangenen elektromagnetischen Wellen in elektrische Signale, wobei der Addierer (17) mit dem zweiten elektromagnetischen Empfänger (52) verbunden ist, um die elektrischen Signale zu empfangen, wobei der zweite elektromagnetische Empfänger (52) die elektromagnetischen Wellen überträgt, wobei der Addierer (17) außerdem in der Lage ist, zu jedem Zeitpunkt mittels eines sechsten Koeffizienten eine gewichtete Summe zwischen dem möglicherweise von dem zweiten elektromagnetischen Empfänger (52) zu diesem Zeitpunkt empfangenen elektrischen Signal und:
• das zu diesem Zeitpunkt von dem ersten Filter (4) oder von dem zweiten Filter (21), falls vorhanden, empfangene elektrische Signal und das zu diesem Zeitpunkt von dem dritten Speicher (16) empfangene elektrische Signal, jeweils gewichtet mittels der ersten und zweiten Koeffizienten und, falls der erste elektromagnetische Empfänger (26) vorhanden ist,
• das zu diesem Zeitpunkt von dem dritten Filter (28) oder von dem vierten Filter (36), falls vorhanden, empfangene elektrische Signal, gewichtet mit dem dritten Koeffizienten und, falls der vierte Speicher (31) vorhanden ist,
• das zu diesem Zeitpunkt von dem vierten Speicher (31) empfangene elektrische Signal, gewichtet mit dem vierten Koeffizienten, von dem es subtrahiert wird, wenn der zweite akustische Empfänger (41) vorhanden ist,
• das elektrische Signal, das zu diesem Zeitpunkt von dem fünften Filter (43) oder von dem sechsten Filter (46), falls vorhanden, empfangen und mit dem fünften Koeffizienten gewichtet wird, so dass der zweite Verstärker (5) auch in der Lage ist, die Summe aus:
• die elektrischen Signale, die von dem Addierer (17) durch den zweiten elektromagnetischen Empfänger (52) empfangen und verstärken und mittels des sechsten Koeffizienten gewichtet werden,
• die vom Addierer (17) vom ersten Filter (4) oder vom zweiten Filter (21), falls vorhanden, empfangenen elektrischen Signale und die vom Addierer (17) vom dritten Speicher (16) empfangenen elektrischen Signale, jeweils gewichtet mittels der ersten und zweiten Koeffizienten und, falls der erste elektromagnetische Empfänger (26) vorhanden ist,
• die vom Addierer (17) empfangenen elektrischen Signale werden vom dritten Filter (28) oder vom vierten Filter (46), falls vorhanden, mit Hilfe des dritten Koeffizienten gewichtet und, falls der vierte Speicher (31) vorhanden ist,
• die von dem Addierer (17) empfangenen elektrischen Signale werden von dem vierten Speicher (31) mit dem vierten Koeffizienten gewichtet, wenn der zweite akustische Empfänger (41) vorhanden ist,
• die vom Addierer (17) empfangenen elektrischen Signale werden vom fünften Filter (43) oder vom sechsten Filter (46), falls vorhanden, mit Hilfe des fünften Koeffizienten gewichtet und subtrahiert, wobei die Ausführungseinheit (13) auch in der Lage ist, den Wert des sechsten Koeffizienten anzupassen.

## Revendications

1. Dispositif (15, 20, 25, 30, 35, 40, 45, 50, 55) applicable à une personne en correspondance avec une oreille de celle-ci, ledit dispositif (15, 20, 25, 30, 35, 40, 45, 50, 55) comprenant :
· un premier récepteur acoustique (2) apte à :
- recevoir des signaux acoustiques provenant d'un environnement extérieur audit dispositif (15, 20, 25, 30, 35, 40, 45, 50, 55) et à
- transformer lesdits signaux acoustiques reçus par ledit premier récepteur acoustique (2) en signaux électriques,
ledit premier récepteur acoustique (2) étant agencé de telle sorte que lorsque ledit dispositif (15, 20, 25, 30, 35, 40, 45, 50, 55) est appliqué à une personne sur une oreille de celle-ci, ledit environnement externe à partir duquel ledit premier récepteur acoustique (2) est apte à recevoir des signaux acoustiques est également externe au conduit auditif externe de ladite oreille ;
• un premier amplificateur à gain variable (3) connecté audit premier récepteur acoustique (2) et apte à amplifier lesdits signaux électriques, dans lequel ledit premier récepteur acoustique (2) transforme lesdits signaux acoustiques ;
• un premier filtre de fréquence (4) connecté audit premier amplificateur (3) et apte à filtrer lesdits signaux électriques tels qu'amplifiés par ledit premier amplificateur (3) ;
• un deuxième amplificateur à gain variable (5) connecté audit premier filtre (4) et apte à amplifier lesdits signaux électriques tels que filtrés par ledit premier filtre (4) ;
• au moins un lecteur audio (6) connecté audit deuxième amplificateur (5) et apte à :
- transformer en signaux acoustiques lesdits signaux électriques tels qu'amplifiés par ledit deuxième amplificateur (5)
et pour
- émettre dans un environnement extérieur audit dispositif (15, 20, 25, 30, 35, 40, 45, 50, 55) lesdits signaux acoustiques dans lesquels ledit lecteur audio (6) transforme lesdits signaux électriques tels qu'amplifiés par ledit deuxième amplificateur (5), ledit lecteur audio (6) étant agencé de telle sorte que lorsque ledit dispositif (15, 20, 25, 30, 35, 40, 45, 50, 55) est appliqué à une personne en correspondance avec une oreille de celle-ci, ledit environnement extérieur dans lequel ledit lecteur audio (6) est apte à émettre des signaux acoustiques est interne au conduit auditif externe de ladite oreille ;
• des moyens de commande (7) reliés à :
- ledit premier amplificateur (3) et aptes à régler un gain dudit premier amplificateur (3) ;
- ledit premier filtre (4) et apte à régler à la fois des fréquences atténuées par ledit premier filtre (4), et un degré d'atténuation de chacune des fréquences atténuées par ledit premier filtre (4) ;
- ledit deuxième amplificateur (5) et apte à régler un gain dudit deuxième amplificateur (5), lesdits moyens de commande (7) comprenant :
- une unité de détection de mouvement (8) apte à :
> détecter un mouvement dudit dispositif (15, 20, 25, 30, 35, 40, 45, 50, 55) et à
> émettre en continu des signaux électriques en fonction du temps, codant des informations concernant les mouvements éventuels dudit dispositif (15, 20, 25, 30, 35, 40, 45, 50, 55) ;
- une première unité d'extraction de caractéristiques (9) connectée à ladite unité de détection (8), ladite première unité d'extraction (9) étant apte à effectuer des analyses dans le domaine temporel et dans le domaine fréquentiel, sur lesdits signaux électriques reçus par ladite unité de détection (8) pendant un intervalle de temps, pour générer un vecteur associé audit intervalle de temps et dont les éléments codent des informations concernant certains aspects d'un ou plusieurs mouvements possibles dudit dispositif (15, 20, 25, 30, 35, 40, 45, 50, 55) pendant ledit intervalle de temps auquel ledit vecteur est associé,
de sorte que des signaux électriques émis en continu et en fonction du temps par ladite unité de détection (8) déterminent, au cours du temps, une génération d'une succession desdits vecteurs par ladite première unité d'extraction (9) ;
- une première mémoire (10) connectée à ladite première unité d'extraction (9) et apte à stocker des règles sur la base desquelles ladite première unité d'extraction (9) est apte à effectuer lesdites analyses dans le domaine temporel et dans le domaine fréquentiel ;
- une première unité de reconnaissance de mouvement (11) reliée à ladite première unité d'extraction (9),
ladite première unité de reconnaissance (11) étant apte à :
> effectuer des analyses sur les éléments desdits vecteurs émis par ladite première unité d'extraction (9) afin d'établir si un ou plusieurs parmi certains mouvements dudit dispositif ont eu lieu ou moins (15, 20, 25, 30, 35, 40, 45, 50, 55),
et à
> émettre des certaines commandes de réglage du gain dudit premier amplificateur (3), de réglage des fréquences atténuées par ledit premier filtre (4), de réglage du degré d'atténuation de chacune des fréquences atténuées par ledit premier filtre (4) et de réglage du gain dudit deuxième amplificateur (5), selon que ledit ou lesdits certains mouvements dudit dispositif ont eu lieu ou moins (15, 20, 25, 30, 35, 40, 45, 50, 55) ;
- une deuxième mémoire (12) reliée à ladite première unité de reconnaissance (11) et apte à stocker des paramètres sur la base desquels ladite première unité de reconnaissance (11) est apte à effectuer lesdites analyses sur les éléments desdits vecteurs émis par ladite première unité d'extraction (9);
- une unité d'exécution (13) reliée à :
> ledit premier amplificateur (3) et apte à régler le gain dudit premier amplificateur (3);
> ledit premier filtre (4) et apte à régler à la fois les fréquences atténuées par ledit premier filtre (4), et le degré d'atténuation de chacune des fréquences atténuées par ledit premier filtre (4) ;
> ledit deuxième amplificateur (5) et apte à régler le gain dudit deuxième amplificateur (5),
ladite unité d'exécution (13) étant également reliée à ladite première unité de reconnaissance (11) et étant apte à mettre en œuvre lesdites commandes émises par ladite première unité de reconnaissance (11);
ledit dispositif (15, 20, 25, 30, 35, 40, 45, 50, 55) étant caractérisé qu'il comprend en outre :
• une troisième mémoire (16) reliée audit premier filtre (4) et apte à :
- stocker lesdits signaux électriques filtrés par ledit premier filtre (4), en continu et dans le même ordre temporel dans lequel lesdits signaux électriques sont émis par ledit premier filtre (4)
et pour
- conserver lesdits signaux électriques émis par ledit premier filtre (4) mémorisés pendant une première période de temps,
ladite troisième mémoire (16) étant gérée selon la méthode "First In First Out" de telle sorte que, lors d'une émission d'un signal électrique dudit premier filtre (4) à un premier instant de temps, ladite troisième mémoire (16),
contenant lesdits signaux électriques émis par ledit premier filtre (4) pendant une période de temps ayant une durée coïncidant avec celle de ladite première période de temps et se terminant à un deuxième instant de temps précédant immédiatement ledit premier instant de temps,
- stocke ledit signal électrique émis par ledit premier filtre (4) audit premier instant de temps et
- émet ledit signal électrique stocké dans ladite troisième mémoire (16) à l'instant de temps où ladite période de temps a commencé ;
• un additionneur (17) relié :
- audit premier filtre (4), pour recevoir lesdits signaux électriques émis par ledit premier filtre (4),
- à ladite troisième mémoire (16), pour la réception desdits signaux électriques émis par ladite troisième mémoire (16),
ledit additionneur (17) étant apte à effectuer, à chaque instant de temps, une somme entre ledit signal électrique reçu par ledit premier filtre (4) audit instant de temps, et ledit signal électrique reçu par ladite troisième mémoire (16) à cet instant de temps, ladite somme effectuée par ledit additionneur (17) étant pondérée au moyen de :
- un premier coefficient associé auxdits signaux électriques reçus par ledit premier filtre (4) et
- un deuxième coefficient associé auxdits signaux électriques reçus par ladite troisième mémoire (16),
chacun desdits premier et deuxième coefficients ayant une valeur égale à zéro lorsque l'autre entre lesdits premier et deuxième coefficients a une valeur autre que zéro,
ledit deuxième amplificateur (5) étant relié à :
- ledit additionneur (17), pour recevoir et amplifier les sommes effectuées par ce dernier
et
- audit premier filtre (4) exclusivement par l'intermédiaire d'au moins ledit additionneur, de sorte que ledit deuxième amplificateur (5) soit apte à recevoir et amplifier :
- lesdits signaux électriques émis par ledit premier filtre (4) et pondérés au moyen dudit premier coefficient
et, mais pas en même temps,
- lesdits signaux électriques émis par ladite troisième mémoire (16) et pondérés au moyen dudit deuxième coefficient,
ladite unité d'exécution (13) étant reliée audit additionneur (17) et étant apte à ajuster la valeur prise par chacun desdits premier et deuxième coefficients,
lesdits moyens de commande (7) comprenant également :
• une deuxième unité d'extraction de caractéristiques (56) reliée audit premier récepteur acoustique (2), ladite deuxième unité d'extraction (56) étant apte à effectuer des analyses dans le domaine temporel et dans le domaine fréquentiel, sur lesdits signaux électriques reçus par ledit premier récepteur acoustique (2) pendant une période de temps, pour la génération d'un vecteur associé à ladite période de temps et dont les éléments codent des informations concernant certains aspects des signaux acoustiques reçus par ledit premier récepteur acoustique (2) pendant ladite période de temps à laquelle ledit vecteur est associé,
de sorte que les signaux électriques émis au cours du temps par ledit premier récepteur acoustique (2) déterminent la génération d'une succession desdits vecteurs par ladite deuxième unité d'extraction (56) ;
• une autre mémoire (57) reliée à ladite deuxième unité d'extraction (56) et apte à stocker des règles sur la base desquelles ladite deuxième unité d'extraction (56) est apte à effectuer lesdites analyses dans le domaine temporel et dans le domaine fréquentiel ;
• une deuxième unité de reconnaissance de signaux acoustiques et de mouvements (58) reliée à la fois à ladite première unité d'extraction (9) et à ladite deuxième unité d'extraction (56),
ladite deuxième unité de reconnaissance (58) étant apte à:
- effectuer des analyses sur les éléments desdits vecteurs émis à la fois par ladite première unité d'extraction (9) et par ladite deuxième unité d'extraction (56) afin d'établir
> si des signaux acoustiques présentant une ou plusieurs caractéristiques déterminées ont été reçus ou non par ledit premier récepteur acoustique (2)
et, dans le cas où des signaux acoustiques présentant une ou plusieurs caractéristiques déterminées ont été reçus par ledit premier récepteur acoustique (2),
> si un ou plusieurs mouvements déterminés dudit dispositif (15, 20, 25, 30, 35, 40, 45, 55) ont eu lieu ou non, des analyses sur les éléments desdits vecteurs émis par ladite deuxième unité d'extraction (56) ont été effectués purement pour établir si les évents générant de tels signaux acoustiques avec les dites une ou plusieurs caractéristiques ont eu lieu ou non dans l'environnement externe audit dispositif (15, 20, 25, 30, 35, 40, 45, 55),
analyses sur les éléments desdits vecteurs émises par la dite première unité d'extraction (9), effectuées purement pour établir si un ou plusieurs desdits mouvements déterminés dudit dispositif (15, 20, 25, 30, 35, 40, 45, 55) ont eu lieu ou moins,
et pour
- émettre des certaines commandes pour jouer les signaux acoustiques en commandant ledit premier amplificateur (3), ledit premier filtre (4) et ledit deuxième amplificateur (5) en fonction du fait que, dans le cas où des signaux acoustiques présentant une ou plusieurs desdites caractéristiques déterminées ont été reçus par ledit premier récepteur acoustique (2), ledit ou lesdits mouvements parmi certains mouvements dudit dispositif (15, 20, 25, 30, 35, 40, 45, 55) ont eu lieu ou non ;
• une mémoire supplémentaire (59) connectée à ladite deuxième unité de reconnaissance (58) et apte à stocker des paramètres sur la base desquels ladite deuxième unité de reconnaissance (58) est apte à effectuer lesdites analyses des éléments desdits vecteurs émis par lesdites première et deuxième unités d'extraction (9, 56), ladite unité d'exécution (13) étant connectée à ladite deuxième unité de reconnaissance (58) pour la mise en œuvre desdites commandes émises par ladite deuxième unité de reconnaissance (58).

2. Dispositif (20) selon la revendication 1, **caractérisé en ce qu'**il comprend un deuxième filtre de fréquence (21) à réponse non linéaire et/ou dépendante du temps, ledit deuxième filtre (21) étant connecté audit premier filtre (4) et étant apte à filtrer en outre lesdits signaux électriques tels que filtrés par ledit premier filtre (4), si ladite troisième mémoire (16) et ledit additionneur (17) ne sont pas présents, ledit deuxième amplificateur (5) étant relié audit deuxième filtre (21) pour recevoir lesdits signaux électriques tels que filtrés par ledit deuxième filtre (21), et audit premier filtre exclusivement au moyen d'au moins ledit deuxième filtre, de sorte que ledit deuxième amplificateur (5) soit apte à amplifier lesdits signaux électriques tels que filtrés par ledit premier filtre (4) exclusivement tels que filtrés en outre par au moins ledit deuxième filtre (21), si ladite troisième mémoire (16) et ledit additionneur (17) sont présents :
• ladite troisième mémoire (16) étant reliée audit deuxième filtre (21) pour recevoir lesdits signaux électriques tel que filtrés par ledit deuxième filtre (21), et audit premier filtre (4) exclusivement par l'intermédiaire d'au moins ledit deuxième filtre (21), de sorte que ladite troisième mémoire (16) est apte à mémoriser, à conserver mémorisé pendant ladite première période de temps et à émettre lesdits signaux électriques tels que filtrés par ledit premier filtre (4) exclusivement tels que filtrés en outre par au moins ledit deuxième filtre (21) et
• ledit additionneur (17) étant connecté audit deuxième filtre (21) pour recevoir lesdits signaux électriques tels que filtrés par ledit deuxième filtre (21), et audit premier filtre (4) exclusivement par l'intermédiaire d'au moins ledit deuxième filtre (21), de sorte que ledit additionneur est apte à effectuer ladite somme pondérée avec lesdits signaux électriques émis par ledit premier filtre (4) exclusivement tels que filtrés en outre par au moins ledit deuxième filtre (21).

3. Dispositif (25) selon l'une quelconque des revendications précédentes, **caractérisé en ce qu'**il comprend :
• un premier récepteur électromagnétique (26) adapté pour :
- recevoir des ondes électromagnétiques radiofréquence codant des signaux acoustiques et à
- transformer lesdites ondes électromagnétiques reçues par ledit premier récepteur électromagnétique (26) en signaux électriques ;
• un troisième amplificateur à gain variable (27) connecté audit premier récepteur électromagnétique (26) et adapté pour amplifier lesdits signaux électriques dans lesquels ledit premier récepteur électromagnétique (26) transfère lesdites ondes électromagnétiques ;
• un troisième filtre de fréquence (28) connecté audit troisième amplificateur (27) et apte à filtrer lesdits signaux électriques tels qu'amplifiés par ledit troisième amplificateur (27), ledit additionneur (17) étant connecté audit troisième filtre (28), pour recevoir lesdits signaux électriques tels que filtrés par ledit troisième filtre (28), ledit additionneur (17) étant en outre apte à additionner, à chaque instant du temps et pondéré au moyen d'un troisième coefficient, ledit signal électrique reçu par ledit troisième filtre (28) audit instant du temps, à ladite somme pondérée, respectivement au moyen desdits premier et deuxième coefficients, entre :
• ledit signal électrique reçu, audit instant, par ledit premier filtre (4), ou par ledit deuxième filtre (21), s'il est présent et
• ledit signal électrique reçu par ladite troisième mémoire (16) audit instant, de sorte que ledit deuxième amplificateur (5) est en outre apte à recevoir et amplifier ladite somme pondérée, respectivement au moyen desdits premier, deuxième et troisième coefficients, entre :
• lesdits signaux électriques reçus par ledit additionneur (17) par ledit premier filtre (4), ou par ledit deuxième filtre (21), s'il est présent,
• lesdits signaux électriques reçus par ledit additionneur (17) par ladite troisième mémoire (16) et
• lesdits signaux électriques reçus par ledit additionneur (17) par ledit troisième filtre (28), ladite unité d'exécution (13) étant reliée à :
• ledit troisième amplificateur (27) et apte à régler le gain dudit troisième amplificateur (27) ;
• ledit troisième filtre (28) et apte à régler à la fois les fréquences atténuées par ledit troisième filtre (28), et le degré d'atténuation de chacune des fréquences atténuées par ledit troisième filtre (28), ladite unité d'exécution (13) étant apte à régler la valeur prise par ledit troisième coefficient.

4. Dispositif (30) selon la revendication 3, **caractérisé en ce qu'**il comprend :
• une quatrième mémoire (31) reliée audit troisième filtre (28) et apte à :
- stocker lesdits signaux électriques tels que filtrés par ledit troisième filtre (28), en continu et dans le même ordre temporel dans lequel lesdits signaux électriques sont émis par ledit troisième filtre (28) et à
- conserver mémorisés pendant une deuxième période de temps lesdits signaux électriques émis par ledit troisième filtre (28), ladite quatrième mémoire étant gérée selon la méthode « First In First Out » de sorte que, lors de l'émission d'un signal électrique dudit troisième filtre (28) à un troisième instant, ladite quatrième mémoire (31), contenant lesdits signaux électriques émis par ledit troisième filtre (28) pendant un intervalle de temps ayant une durée coïncidant avec celle dudit deuxième intervalle de temps et se terminant dans un quatrième instant de temps précédant immédiatement ledit troisième instant de temps,
- mémoriser ledit signal électrique émis par ledit troisième filtre (28) audit troisième instant et
- émettre ledit signal électrique stocké dans ladite quatrième mémoire (31) à l'instant où ledit intervalle de temps a commencé, ledit additionneur (17), en plus d'être connecté audit troisième filtre (28) pour la réception desdits signaux électriques émis par ledit troisième filtre (28), étant connecté à ladite quatrième mémoire (31) pour la réception desdits signaux électriques émis par ladite quatrième mémoire (31), ledit additionneur (17) étant apte à effectuer, à chaque instant de temps, une somme entre ledit signal électrique reçu par ledit troisième filtre (28) audit instant de temps, et ledit signal électrique reçu par ladite quatrième mémoire (31) audit instant de temps, ladite somme effectuée par ledit additionneur entre lesdits signaux électriques reçus par ledit troisième filtre (28) et lesdits signaux électriques reçus par ladite quatrième mémoire (31) étant pondérée au moyen de :
• ledit troisième coefficient, associé auxdits signaux électriques reçus par ledit troisième filtre (28) et
• un quatrième coefficient associé auxdits signaux électriques reçus par ladite quatrième mémoire (31), chacun desdits troisième et quatrième coefficients ayant une valeur égale à zéro chaque fois que l'autre desdits troisième et quatrième coefficients a une valeur autre que zéro, de sorte que ledit deuxième amplificateur (5), étant connecté audit troisième filtre (28) exclusivement par l'intermédiaire au moins dudit additionneur (17), est apte à recevoir et amplifier :
• lesdits signaux électriques émis par ledit troisième filtre (28) et pondérés au moyen dudit troisième coefficient et, mais pas en même temps,
• lesdits signaux électriques émis par ladite quatrième mémoire (31) et pondérés au moyen dudit quatrième coefficient, ledit additionneur (17) étant également apte à effectuer, à tout instant du temps, une somme pondérée, respectivement au moyen desdits premier, deuxième, troisième et quatrième coefficients, entre :
• ledit signal électrique reçu, audit instant, par ledit premier filtre (4), ou par ledit deuxième filtre (21), s'il est présent,
• ledit signal électrique reçu par ladite troisième mémoire (16) audit instant,
• ledit signal électrique reçu par ledit troisième filtre (28) audit instant et
• ledit signal électrique reçu par ladite quatrième mémoire (31) audit instant, de sorte que ledit deuxième amplificateur (5) est en outre apte à recevoir et amplifier ladite somme pondérée, respectivement au moyen desdits premier, deuxième, troisième et quatrième coefficients, entre :
• lesdits signaux électriques reçus par ledit additionneur (17) par ledit premier filtre (4), ou par ledit deuxième filtre (21), s'il est présent,
• lesdits signaux électriques reçus par ledit additionneur (17) par ladite troisième mémoire (16),
• lesdits signaux électriques reçus par ledit additionneur (17) par ledit troisième filtre (28) et
• lesdits signaux électriques reçus par ledit additionneur (17) par ladite quatrième mémoire (31), ladite unité d'exécution (13) étant apte à régler la valeur prise par ledit quatrième coefficient.

5. Dispositif (35) selon la revendication 3 ou 4, **caractérisé en ce qu'**il comprend un quatrième filtre de fréquence (36) à réponse non linéaire et/ou dépendante du temps, ledit quatrième filtre (36) étant connecté audit troisième filtre (28) et étant adapté pour filtrer en outre lesdits signaux électriques tels que filtrés par ledit troisième filtre (28), ledit additionneur (17) étant connecté audit quatrième filtre (36) pour recevoir lesdits signaux électriques tels que filtrés par ledit quatrième filtre (36), et audit troisième filtre (28) exclusivement par l'intermédiaire d'au moins ledit quatrième filtre (36), de sorte que ledit additionneur (17) est apte à recevoir et à effectuer ladite somme pondérée avec lesdits signaux électriques émis par ledit troisième filtre (28) exclusivement tels que filtrés en outre par au moins ledit quatrième filtre (36), si ladite quatrième mémoire (31) est présente, ladite quatrième mémoire (31) étant connectée audit quatrième filtre (36) pour la réception desdits signaux électriques tels que filtrés par ledit quatrième filtre (36), et audit troisième filtre (28) exclusivement par l'intermédiaire d'au moins ledit quatrième filtre (36), de sorte que ladite quatrième mémoire (31) est adaptée pour stocker, maintenir stocké pendant ladite deuxième période de temps et émettre lesdits signaux électriques tels que filtrés par ledit troisième filtre (28) exclusivement tels que filtrés en outre par au moins ledit quatrième filtre (36).

6. Dispositif (40) selon l'une quelconque des revendications précédentes, **caractérisé en ce qu'**il comprend :
• un deuxième récepteur acoustique (41) adapté pour :
- recevoir des signaux acoustiques provenant d'un environnement extérieur audit dispositif (40), et à
- transférer en signaux électriques lesdits signaux acoustiques reçus par ledit deuxième récepteur acoustique (41), ledit deuxième récepteur acoustique (41) étant agencé de telle manière que, lorsque ledit dispositif (40) est appliqué à une personne au niveau d'une oreille de celle-ci, ledit environnement externe à partir duquel ledit deuxième récepteur acoustique (41) est apte à recevoir lesdits signaux acoustiques est interne au conduit auditif externe de ladite oreille ;
• un quatrième amplificateur à gain variable (42) connecté audit deuxième récepteur acoustique (41) et adapté pour amplifier lesdits signaux électriques dans lesquels ledit deuxième récepteur acoustique (41) transfère lesdits signaux acoustiques ;
• un cinquième filtre de fréquence (43) connecté audit quatrième amplificateur (42) et adapté pour filtrer lesdits signaux électriques tels qu'amplifiés par ledit quatrième amplificateur (42); ledit additionneur (17) étant connecté audit cinquième filtre (43), pour recevoir lesdits signaux électriques tels que filtrés par ledit cinquième filtre (43), ledit additionneur (17) étant en outre apte à soustraire, à chaque instant du temps et de manière pondérée au moyen d'un cinquième coefficient, ledit signal électrique reçu par ledit cinquième filtre (43) audit instant du temps, de ladite somme entre :
• ledit signal électrique reçu, audit instant, par ledit premier filtre (4), ou par ledit deuxième filtre (21), s'il est présent, et ledit signal électrique reçu par ladite troisième mémoire (16) audit instant, respectivement pondérés au moyen desdits premier et deuxième coefficients et, si ledit premier récepteur électromagnétique (26) est présent,
• ledit signal électrique reçu, audit instant, par ledit troisième filtre (28), ou par ledit quatrième filtre (36), s'il est présent, pondéré au moyen dudit troisième coefficient et, si ladite quatrième mémoire (31) est présente,
• ledit signal électrique reçu par ladite quatrième mémoire (31) audit instant, pondéré au moyen dudit quatrième coefficient, de sorte que ledit deuxième amplificateur (5) est également apte à recevoir et amplifier ladite somme entre :
• lesdits signaux électriques reçus par ledit additionneur (17) par ledit premier filtre (4), ou par ledit deuxième filtre (21), s'il est présent, et lesdits signaux électriques reçus par ledit additionneur (17) par ladite troisième mémoire (16), respectivement pondérés au moyen desdits premier et deuxième coefficients et, si ledit premier récepteur électromagnétique (26) est présent,
• lesdits signaux électriques reçus par ledit additionneur (17) par ledit troisième filtre (28), ou par ledit quatrième filtre (36), s'il est présent, pondérés au moyen dudit troisième coefficient et, si ladite quatrième mémoire (31) est présente,
• lesdits signaux électriques reçus par ledit additionneur (17) par ladite quatrième mémoire (31) pondérés au moyen dudit quatrième coefficient, duquel lesdits signaux électriques reçus par ledit additionneur (17) ont été soustraits par ledit cinquième filtre (43) et pondérés au moyen dudit cinquième coefficient, ladite unité d'exécution (13) étant en outre connectée à :
• ledit quatrième amplificateur (42) et apte à régler le gain dudit quatrième amplificateur (42) ;
• ledit cinquième filtre (43) et apte à régler à la fois les fréquences atténuées par ledit cinquième filtre (43) et le degré d'atténuation de chacune des fréquences atténuées par ledit cinquième filtre (43), ladite unité d'exécution (13) étant également apte à régler la valeur prise par ledit cinquième coefficient.

7. Dispositif (45) selon la revendication 6, **caractérisé en ce qu'**il comprend un sixième filtre de fréquence (46) à réponse non linéaire et/ou temporelle, ledit sixième filtre (46) étant connecté audit cinquième filtre (43) et étant adapté pour filtrer en outre lesdits signaux électriques tels que filtrés par ledit cinquième filtre (43), ledit additionneur (17) étant connecté audit sixième filtre (46) pour recevoir lesdits signaux électriques tels que filtrés par ledit sixième filtre (46), et audit cinquième filtre (43) exclusivement par l'intermédiaire d'au moins ledit sixième filtre (46), de sorte que ledit additionneur (17) est apte à recevoir et à effectuer ladite somme pondérée avec lesdits signaux électriques émis par ledit cinquième filtre (43) exclusivement tels que filtrés en outre par au moins ledit sixième filtre (46).

8. Dispositif (50) selon l'une des revendications précédentes, **caractérisé en ce qu'**il comprend :
• un émetteur électromagnétique (51) connecté audit premier filtre (4), ou audit deuxième filtre (21), s'il est présent, et adapté pour .
- transformer lesdits signaux électriques filtrés par ledit premier filtre (4), ou lesdits signaux électriques filtrés par ledit deuxième filtre (21), s'il est présent, en ondes électromagnétiques radiofréquence et à
- émettre dans un environnement extérieur audit dispositif (50) lesdites ondes électromagnétiques dans lesquelles ledit émetteur électromagnétique (51) a transféré lesdits signaux électriques tels que filtrés par ledit premier filtre (4), ou lesdits signaux électriques tels que filtrés par ledit deuxième filtre (21), s'il est présent ;
• un deuxième récepteur électromagnétique (52) adapté pour
- recevoir des ondes électromagnétiques à radiofréquence, et à
- transformer en signaux électriques lesdites ondes électromagnétiques reçues par ledit deuxième récepteur électromagnétique (52), ledit additionneur (17) étant connecté audit deuxième récepteur électromagnétique (52) pour recevoir lesdits signaux électriques, ledit deuxième récepteur électromagnétique (52) transférant lesdites ondes électromagnétiques, ledit additionneur (17) étant en outre apte à effectuer, à tout instant du temps, une somme pondérée, au moyen d'un sixième coefficient, entre ledit signal électrique éventuellement reçu par ledit deuxième récepteur électromagnétique (52) audit instant du temps et :
• ledit signal électrique reçu, audit instant, par ledit premier filtre (4) ou par ledit deuxième filtre (21), s'il est présent, et ledit signal électrique reçu par ladite troisième mémoire (16) audit instant, respectivement pondérés au moyen desdits premier et deuxième coefficients et, si ledit premier récepteur électromagnétique (26) est présent,
• ledit signal électrique reçu, audit instant, par ledit troisième filtre (28), ou par ledit quatrième filtre (36), s'il est présent, pondéré au moyen dudit troisième coefficient et, si ladite quatrième mémoire (31) est présente,
• ledit signal électrique reçu, audit instant, par ladite quatrième mémoire (31), pondéré au moyen dudit quatrième coefficient, duquel il est soustrait, si ledit deuxième récepteur acoustique (41) est présent,
• ledit signal électrique reçu, audit instant, par ledit cinquième filtre (43), ou par ledit sixième filtre (46), s'il est présent, pondéré au moyen dudit cinquième coefficient, de sorte que ledit deuxième amplificateur (5) est également apte à recevoir et amplifier ladite somme entre :
• lesdits signaux électriques reçus par ledit additionneur (17) par ledit deuxième récepteur électromagnétique (52) et pondérés au moyen dudit sixième coefficient,
• lesdits signaux électriques reçus par ledit additionneur (17) par ledit premier filtre (4), ou par ledit deuxième filtre (21), s'il est présent, et lesdits signaux électriques reçus par ledit additionneur (17) par ladite troisième mémoire (16), respectivement pondérés au moyen desdits premier et deuxième coefficients et, si ledit premier récepteur électromagnétique (26) est présent,
• lesdits signaux électriques reçus par ledit additionneur (17) par ledit troisième filtre (28), ou par ledit quatrième filtre (46), s'il est présent, pondérés au moyen dudit troisième coefficient et, si ladite quatrième mémoire (31) est présente,
• lesdits signaux électriques reçus par ledit additionneur (17) par ladite quatrième mémoire (31) pondérés au moyen dudit quatrième coefficient, qui sont soustraits, si ledit deuxième récepteur acoustique (41) est présent,
• lesdits signaux électriques reçus par ledit additionneur (17) par ledit cinquième filtre (43), ou par ledit sixième filtre (46), s'il est présent, pondérés au moyen dudit cinquième coefficient, ladite unité d'exécution (13) étant également apte à régler la valeur prise par ledit sixième coefficient.
